(19) Europäisches Patentamt / European Patent Office / Office européen des brevets

(11) **EP 4 707 906 A1**

(12) **DEMANDE DE BREVET EUROPEEN**

(43) Date de publication:
**11.03.2026 Bulletin 2026/11**

(21) Numéro de dépôt: **25200885.9**

(22) Date de dépôt: **08.09.2025**

(51) Classification Internationale des Brevets (IPC):
**G02F 1/01** *(2006.01)*      **G02F 1/035** *(2006.01)*
**G02F 1/13** *(2006.01)*      **G02F 1/295** *(2006.01)*
**G02F 1/29** *(2006.01)*

(52) Classification Coopérative des Brevets (CPC):
**G02F 1/0136; G02F 1/0353; G02F 1/1326;**
**G02F 1/29; G02F 1/295; G02F 1/2955;**
G02F 2203/07

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **10.09.2024 FR 2409630**

(71) Demandeur: **Commissariat à l'Energie Atomique et aux Energies Alternatives 75015 Paris (FR)**

(72) Inventeurs:
• **MARTINEZ, Christophe**
  **38054 GRENOBLE CEDEX 09 (FR)**
• **TOUBI, Salaheddine**
  **38054 GRENOBLE CEDEX 09 (FR)**

(74) Mandataire: **Santarelli**
  **Tour Trinity**
  **1 bis Place de la Défense**
  **92400 Courbevoie (FR)**

(54) **STRUCTURE D EXTRACTION D'UN MODE GUIDÉ**

(57)    L'invention porte sur une structure d'extraction d'un mode guidé de longueur d'onde λ, polarisé linéairement, comportant : un guide d'onde principal apte à guider le mode guidé ; un guide d'onde intermédiaire en cristal liquide, apte à guider un mode couplé, s'étendant parallèlement à la face supérieure d'un substrat ; une surface plane réfléchissante en regard d'une face de sortie du guide d'onde intermédiaire, faisant un angle non nul avec le substrat ; des première et deuxième électrodes agencées par rapport au cœur du guide d'onde intermédiaire de façon à faire basculer un indice de réfraction du cristal liquide d'un premier niveau vers un deuxième niveau, lorsqu'une variation d'une différence de potentiel électrique est appliquée entre les première et deuxième électrodes. Le mode guidé est couplé par couplage évanescent mode couplé uniquement lorsque l'indice de réfraction du cristal liquide est égal au deuxième niveau.

[Fig. 1A]

**Fig. 1A**

EP 4 707 906 A1

## Description

## DOMAINE TECHNIQUE

Le domaine de l'invention est celui des structures d'extraction d'un mode guidé se propageant dans un guide d'onde intégré. Plus précisément, l'invention concerne une structure d'extraction active permettant de commander l'extraction du mode guidé. Elle concerne également un procédé de fabrication d'une telle structure d'extraction et un dispositif optique mettant en œuvre une pluralité de structures d'extraction actives.

## ÉTAT DE LA TECHNIQUE ANTÉRIEURE

Des structures d'extraction d'un mode guidé sont connues du domaine de la photonique intégrée. Il existe, par exemple, les réseaux de diffraction surfaciques. Un réseau de diffraction surfacique est une structure périodique gravée à la surface d'un guide d'onde dans lequel se propage le mode guidé. La période du réseau surfacique est adaptée pour diffracter sélectivement la longueur d'onde du mode guidé, permettant d'en extraire une partie au moins. Les réseaux de diffraction surfaciques sont par exemple utilisés pour extraire un mode guidé d'un guide d'onde vers une fibre optique ou inversement. Ils sont souvent préférés aux coupleurs par la tranche et sont parfois indispensables, notamment pour tester des puces photoniques avant individualisation par découpe. Les réseaux de diffraction sont généralement des structures d'extraction passives, c'est-à-dire que leur efficacité d'extraction est fixée une fois pour toutes lors de leur fabrication.

Il existe également des structures actives d'extraction d'un mode guidé se propageant dans un guide d'onde intégré, c'est-à-dire commandable entre un état ouvert pour lequel une partie au moins de l'énergie du mode guidé est extraite du guide d'onde pour générer un flux lumineux directionnel, et un état fermé pour lequel le mode guidé reste en totalité confiné dans le guide d'onde. La majorité de l'énergie du flux lumineux directionnel se propage à l'intérieur d'un angle solide strictement inférieur à $2\pi$ stéradians autour d'une direction principale. L'angle solide peut par exemple être inférieur à $0,5\pi$ stéradians. Lorsqu'elle est dans un état ouvert, on dit que la structure d'extraction est activée.

Les structures d'extraction actives sont par exemple utilisées dans des écrans pour des applications de réalité étendue (réalité augmentée, réalité virtuelle ou réalité mixte). Pour citer un exemple, elles ont récemment été utilisées dans un nouveau type de micro-écran pour la réalité augmentée exploitant un effet d'auto-focalisation, comme celui décrit dans le document C. Martinez et al. « See-through holographic retinal projection display concept », Optica, vol. 5, n° 10, p. 1200, oct. 2018, doi: 10.1364/OPTICA.5.001200. Ce type de micro-écrans permet de se passer de systèmes optiques pour projeter une image dans l'oeil d'un utilisateur, et peut par conséquent être intégré dans des systèmes optiques moins complexes, moins encombrants et moins lourds.

Dans les grandes lignes, un pixel d'un tel écran résulte de la combinaison de plusieurs ondes lumineuses cohérentes entre-elles, issues d'une distribution de points d'émission. La lumière est amenée au regard des points d'émission par un réseau de guides d'ondes intégrés, connectés optiquement à une source lumineuse. Chaque point d'émission comporte une structure d'extraction active permettant d'extraire sur commande de la lumière depuis un guide d'onde correspondant. Un film holographique disposé sur les structures d'extraction actives permet d'ajuster la phase et la direction de la lumière extraite par les structures d'extraction actives. Les points d'émissions peuvent par exemple émettre des ondes lumineuses ayant la même phase modulo $2\pi$ et se propageant autour d'axes principaux parallèles. Dans ce cas, l'oeil de l'observateur voit un point net correspondant à un pixel virtuel situé à l'infini. Un circuit de commande connecté à la source lumineuse et à un réseau d'électrodes permet d'activer en même temps la source lumineuse et les structures d'extraction correspondant au pixel.

Le document Matthias Colard, et al., "Study of a liquid crystal impregnated diffraction grating for active waveguide addressing," Proc. SPIE 12023, Emerging Liquid Crystal Technologies XVII, 1202302 (3 March 2022); doi: 10.1117/12.2607475 décrit deux modes de réalisation d'une structure d'extraction active adaptés à la réalisation de micro-écrans exploitant un effet d'auto-focalisation.

Un premier mode de réalisation vise à modifier le contraste d'indice d'un réseau de diffraction. Il met en œuvre un réseau de diffraction surfacique formé sur un guide d'onde ; le réseau surfacique baignant dans un cristal liquide. L'indice de réfraction du réseau surfacique est par exemple sensiblement égal à l'indice de réfraction ordinaire du cristal liquide. Un couple d'électrodes permet d'appliquer un champ électrique dans le cristal liquide, perpendiculaire au plan moyen du réseau surfacique. Lorsqu'une différence de potentiel électrique est appliquée entre les deux électrodes, le champ électrique aligne les molécules du cristal liquide perpendiculairement au plan moyen du réseau surfacique. Un mode de type transverse électrique (TE) guidé par le guide d'onde rencontre une structure uniforme d'indice égal à l'indice ordinaire. Il reste donc en grande partie confiné à l'intérieur du guide d'onde. Inversement, lorsque les électrodes sont au même potentiel électrique, le champ électrique est nul dans le cristal liquide et les molécules du cristal liquide s'orientent suivant une direction parallèle au plan moyen du réseau surfacique. Le mode de type transverse électrique TE interagit alors avec un milieu d'indice de réfraction sensiblement égal à l'indice ordinaire au niveau d'une dent du réseau surfacique, et un milieu d'indice de réfraction égal à l'indice de réfraction extraordinaire du cristal liquide entre deux dents du réseau surfacique. Il est par conséquent diffracté et en partie extrait du guide d'onde. Dans le cas pour lequel le mode transverse électrique (TE) ne perçoit pas de modulation d'indice de réfraction au niveau du réseau de diffraction, une petite partie de ce mode est cependant diffractée par une couche d'ancrage du cristal liquide qui épouse le réseau de diffraction.

Un deuxième mode de réalisation permet de résoudre cet inconvénient. Il vise à modifier le confinement d'un mode guidé pour le faire interagir ou non avec un réseau de diffraction. Dans ce mode de réalisation, un cristal liquide s'étend depuis une face inférieure vers une face supérieure. Un cœur d'un guide d'onde est en contact avec la face inférieure. Un réseau de diffraction est formé dans le cristal liquide et affleure la face supérieure du cristal liquide. Le réseau de diffraction comporte des dents disposées perpendiculairement à un axe optique du guide d'onde. Des électrodes interdigitées en oxyde d'indium-étain (ITO) sont agencées dans un plan parallèle à la face supérieure, en regard du cristal liquide d'un côté opposé à la face inférieure. Les électrodes sont aptes à appliquer un champ électrique dans le cristal liquide parallèle à l'axe optique du guide d'onde. Une couche d'ancrage permet d'aligner les molécules du cristal liquide parallèlement aux dents du réseau de diffraction en absence de champ électrique dans le cristal liquide. Le cœur du guide d'onde a un indice de réfraction supérieur ou égal à un indice de réfraction extraordinaire (ne) du cristal liquide.

Ainsi, en fonctionnement, lorsqu'une différence de potentiel électrique est appliquée aux bornes des électrodes, les molécules du cristal liquide s'alignent parallèlement à l'axe optique. Un mode polarisé de type transverse électrique (TE) interagit alors avec un revêtement d'indice de réfraction égal à l'indice de réfraction ordinaire (no) du cristal liquide. Le contraste d'indices de réfraction entre le cœur et le revêtement est donc maximal et le mode de type TE reste suffisamment confiné pour ne pas interagir avec le réseau de diffraction. Aucune lumière n'est alors extraite. Inversement, lorsque les électrodes sont au même potentiel électrique, le champ électrique est sensiblement nul dans le cristal liquide. Les molécules du cristal liquide sont alignées parallèlement aux dents du réseau de diffraction. Le mode de type TE interagit alors avec un revêtement d'indice de réfraction égale à l'indice de réfraction extraordinaire (ne) du cristal liquide. Le contraste d'indices de réfraction entre le cœur et le revêtement est donc minimal et une partie évanescente du mode de type TE s'étend jusqu'au réseau de diffraction. Une partie du mode de type TE est alors extraite du guide d'onde.

Ces deux modes de réalisation ont cependant pour inconvénient de diffracter le mode guidé dans des ordres de diffraction inutiles ou parasites, ce qui induit par conséquent, des pertes indésirables, et un manque de directivité de la lumière extraite par la structure d'extraction active. Pour l'application spécifique des micro-écrans, les ordres de diffractions parasites peuvent former des images parasites. De plus, le maximum de puissance de la lumière extraite est atteint pour une grande longueur de réseau de diffraction. Il en résulte que la structure d'extraction active est encombrante.

## EXPOSÉ DE L'INVENTION

L'invention a pour objectif de remédier au moins en partie aux inconvénients de l'art antérieur, et plus particulièrement de proposer une structure d'extraction d'un mode guidé présentant de faibles pertes et permettant d'accroître la directivité d'une lumière extraite par la structure d'extraction. L'invention a également pour objectif de proposer un dispositif optique, tel qu'un micro-écran, plus lumineux et plus compact.

Pour cela, l'objet de l'invention est une structure d'extraction d'un mode guidé de longueur d'onde λ, polarisé linéairement selon une direction de polarisation, comportant : un substrat support comprenant une face supérieure sensiblement plane ; un guide d'onde principal apte à guider le mode guidé ; un guide d'onde intermédiaire apte à guider un mode, dit couplé, à la longueur d'onde λ, comprenant un cœur en un cristal liquide s'étendant parallèlement à la face supérieure, et une face de sortie, le cœur s'étendant jusqu'à la face de sortie ; une surface plane en regard de la face de sortie, réfléchissante à la longueur d'onde λ, faisant un angle non nul avec la face supérieure du substrat support ; une première électrode et une deuxième électrode, agencées par rapport au cœur du guide d'onde intermédiaire de façon à faire basculer, dans une portion de couplage du cœur du guide d'onde intermédiaire, un indice de réfraction du cristal liquide, selon la direction de polarisation, d'un premier niveau vers un deuxième niveau, lorsqu'une variation d'une différence de potentiel électrique est appliquée entre la première et la deuxième électrodes.

Le premier niveau, le deuxième niveau et l'agencement de la portion de couplage par rapport au guide d'onde principal sont tels que le mode guidé, lorsqu'il est présent, est couplé au moins en partie, par couplage évanescent du guide d'onde principal vers la portion de couplage uniquement lorsque l'indice de réfraction de la portion de couplage est égal au deuxième niveau.

Certains aspects préférés mais non limitatifs de cette structure d'extraction sont les suivants.

La première électrode peut être dite enterrée. L'électrode enterrée, le guide d'onde principal, le guide d'onde intermédiaire et la deuxième électrode peuvent s'étendre dans des plans distincts, parallèles à la face supérieure du substrat support, le guide d'onde principal et le guide d'onde intermédiaire pouvant être intercalés entre l'électrode enterrée et la deuxième électrode.

La surface plane réfléchissante peut être une interface entre un premier milieu et un deuxième milieu transparents à la longueur d'onde λ, le premier milieu pouvant être agencé entre la face de sortie et la surface plane réfléchissante et pouvant avoir un indice de réfraction strictement supérieur à un indice de réfraction du deuxième milieu, et telle que, lorsque le mode guidé est présent et couplé au moins en partie, une onde lumineuse transmise issue du mode guidé peut se propager depuis la face de sortie vers la surface plane réfléchissante le long d'un axe principal pouvant faire un angle $\alpha$ avec une normale à la surface plane réfléchissante supérieur ou égal à un angle d'incidence minimal sur la surface plane réfléchissante pour lequel la lumière est totalement réfléchie.

Le guide d'onde intermédiaire peut avoir une extrémité en vis-à-vis du guide d'onde principal, le coeur pouvant s'étendre de l'extrémité à la face de sortie.

L'extrémité peut faire un angle non nul avec la face supérieure du substrat support de sorte à réaliser une région de couplage adiabatique.

La surface plane réfléchissante peut être une surface métallisée.

Le mode guidé peut être un mode TM, le cristal liquide peut comporter une phase nématique et le deuxième niveau peut être un indice de réfraction extraordinaire du cristal liquide.

La longueur d'onde $\lambda$ peut être comprise dans le spectre visible.

L'invention porte également sur un dispositif optique comportant un premier groupe de plusieurs structures d'extraction selon l'une quelconque des caractéristiques précédentes, partageant le substrat support, tel que le guide d'onde principal de chaque structure d'extraction est une portion d'un premier guide d'onde principal.

Le dispositif optique peut comporter en outre un deuxième groupe de plusieurs structures d'extraction selon l'une quelconque des caractéristiques précédentes, pouvant partager le substrat support entre-elles et avec les structures d'extraction du premier groupe. Le guide d'onde principal de chaque structure d'extraction du deuxième groupe peut être une portion d'un deuxième guide d'onde principal distinct du premier guide d'onde principal.

A chaque structure d'extraction du premier groupe peut correspondre une structure d'extraction correspondante du deuxième groupe telle que leurs guides d'onde intermédiaires peuvent être deux portions d'un guide d'onde intermédiaire commun.

La surface plane réfléchissante de chaque structure d'extraction du premier groupe et, le cas échéant, du deuxième groupe peut être l'extrémité du guide d'onde intermédiaire d'une autre structure d'extraction du même groupe.

Tous les guides d'onde intermédiaires des structures d'extraction peuvent avoir des hauteurs égales, mesurées perpendiculairement à la face supérieure.

L'invention porte également sur un procédé de fabrication d'une structure d'extraction ou d'un dispositif optique selon l'une quelconque des caractéristiques précédentes, comportant les étapes suivantes : les étapes suivantes : fourniture d'un substrat support comprenant un guide d'onde principal ; fourniture d'un substrat d'encapsulation ; formation d'une couche structurée sur le substrat support ou le substrat d'encapsulation, par un procédé de lithographie par nano-impression, la couche structurée comportant des parties saillantes de hauteurs identiques égales à une hauteur commune ; formation d'un cordon de colle sur le substrat support ou le substrat d'encapsulation, tel que le cordon de colle a une épaisseur supérieure ou égale à la hauteur commune, délimite une région centrale, et comporte une ouverture latérale traversante communiquant avec la région centrale ; report du substrat d'encapsulation sur le substrat support de façon à ce que la couche structurée joue le rôle d'une entretoise fixant un écartement entre le substrat d'encapsulation et le substrat support, et délimite un volume continu dans la région centrale destiné à être le coeur du guide d'onde intermédiaire ; collage du substrat d'encapsulation au substrat support par le cordon de colle ; introduction d'un cristal liquide dans le volume continue par l'ouverture latérale traversante.

Le procédé de lithographie par nano-impression peut mettre en œuvre un moule de référence obtenu par les étapes suivantes : fourniture d'un substrat temporaire pouvant comporter une face supérieure et des tranchées pouvant s'étendre en profondeur dans le substrat temporaire depuis la face supérieure ; remplissage des tranchées par une résine photosensible positive ; insolation de la résine photosensible positive par une lumière collimatée pouvant se propager dans la résine photosensible positive selon une direction faisant un angle $\theta_0$ compris entre 30° et 60° avec la face supérieure.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A est une vue schématique en coupe d'un premier mode de réalisation d'une structure d'extraction selon l'invention ;

la figure 1B est une vue schématique en coupe d'un détail du premier mode de réalisation ;

la figure 2 est une vue schématique en coupe d'un deuxième mode de réalisation d'une structure d'extraction selon l'invention ;

la figure 3 est une vue schématique en coupe d'un troisième mode de réalisation d'une structure d'extraction selon l'invention ;

la figure 4A est une vue schématique en coupe d'un exemple de dispositif optique mettant en œuvre des structures d'extraction selon le premier mode de réalisation ;

la figure 4B est une vue en perspective d'un détail de l'exemple de dispositif optique ;

les figures 5A à 5D sont des résultats de simulation conduisant à l'optimisation d'une structure d'extraction selon l'invention ;

la figure 6 est un résultat de simulation du premier mode de réalisation ;

les figures 7A à 7H sont des vues schématiques en coupe d'étapes d'un procédé de fabrication d'un moule de référence et d'un moule tampon pouvant servir à la réalisation d'une structure d'extraction selon l'invention ;

les figures 8A à 8D sont des vues schématiques en coupe d'étapes d'un procédé de fabrication d'une partie supérieure d'une structure d'extraction selon l'invention ;

les figures 9A et 9B sont des vues schématiques en coupe d'étapes d'un procédé de fabrication d'une structure d'extraction selon l'invention intégrant la partie supérieure.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur une structure d'extraction d'un mode guidé de longueur d'onde λ. Elle comporte un substrat support, un guide d'onde principal et un guide d'onde intermédiaire. Le guide d'onde intermédiaire comporte un coeur qui comprend un cristal liquide. Le cristal liquide a un indice de réfraction ordinaire (no) et un indice de réfraction extraordinaire (ne). Le guide d'onde principal peut être séparé du guide d'onde intermédiaire par une couche d'encapsulation supérieure. La couche d'encapsulation supérieure a un indice de réfraction strictement inférieur à l'indice de réfraction extraordinaire (ne) et à un indice de réfraction du coeur du guide d'onde principal.

La structure d'extraction comporte en outre une première électrode et une deuxième électrode agencées, par rapport au guide d'onde intermédiaire, de façon à appliquer un champ électrique dans une portion de couplage du cristal liquide. Dans un mode de réalisation illustratif de l'invention, le champ électrique est apte à orienter des molécules du cristal liquide dans une direction orthogonale à une direction adoptée par les molécules en absence de champ électrique dans le cristal liquide. Ainsi, par une modification de l'amplitude du champ électrique, la structure d'extraction bascule entre un état ouvert pour lequel une partie au moins d'un mode guidé par le guide d'onde principal est couplé par couplage évanescent du guide d'onde principal vers le guide d'onde intermédiaire, et un état fermé pour lequel le mode guidé reste en totalité confiné dans le guide d'onde principal. C'est-à-dire qu'une variation d'une différence de potentiel électrique appliquée entre la première électrode et la deuxième électrode fait varier l'indice de réfraction du guide d'onde intermédiaire de façon à rendre possible la propagation d'un mode du guide d'onde intermédiaire qui a une constante de propagation égale à la constante de propagation du mode guidé par le guide d'onde principal- dans ce cas, les indices effectifs des deux modes sont égaux.

Une surface réfléchissante de renvoi en regard d'une face de sortie du guide d'onde intermédiaire dévie ensuite la partie du mode guidé vers le milieu environnant la structure d'extraction. L'activation d'un couplage évanescent en combinaison avec la surface réfléchissante permet d'extraire efficacement la lumière, avec des pertes minimales, selon une direction angulaire unique .

Dans toute la description, il est donné à l'expression « indice effectif d'un mode guidé par un guide d'onde » son sens commun dans le domaine technique de l'invention. L'indice effectif est une moyenne pondérée des indices de réfraction des matériaux constituant le guide d'onde. Il est relié à la constante de propagation β du mode guidé par le guide d'onde par la relation

$$\beta = \frac{2\pi n_{eff}}{\lambda},$$ où $n_{eff}$ est l'indice effectif et λ la longueur d'onde du mode guidé. La constante de propagation β et/ou l'indice effectif $n_{eff}$ peuvent par exemple être déterminés par simulation.

Dans toute la description, un guide d'onde est un guide d'onde monomode ou multimode apte à confiner la lumière, par opposition aux guides optiques à l'intérieur desquels la lumière se propage par réflexion totale interne. Sans plus de précisions, un guide d'onde peut être de type quelconque. Cela peut par exemple être un guide ruban, en arête ou planaire. Un guide d'onde a un cœur, appelé parfois voie de guidage, et un revêtement entourant le cœur de façon à être en contact physique avec lui. Un contraste ou une variation d'indices de réfraction entre le cœur et le revêtement permet de confiner la lumière. Le revêtement peut comprendre plusieurs parties distinctes et être en un ou plusieurs matériaux différents. Les guides d'onde sont repérés par leurs cœurs sur les figures. De même, sans plus de précision, un indice de réfraction d'un guide d'onde est un indice de réfraction du cœur du guide d'onde ; une distance séparant deux guides d'onde est la distance séparant les cœurs des guides d'onde respectifs ; le matériau d'un guide d'onde est le matériau du cœur du guide d'onde ; lorsqu'un guide d'onde s'étend selon une direction, on entend que le cœur du guide d'onde s'étend selon cette direction ; lorsqu'un guide d'onde est en contact avec une couche, on entend que le cœur du guide d'onde est en contact avec la couche.

Par couche, on entend une étendue constituée d'une ou plusieurs sous-couches d'un matériau dont l'épaisseur suivant un axe Z est inférieure, par exemple dix fois, voire vingt fois, à ses dimensions longitudinales de largeur et de longueur dans un plan (X, Y) perpendiculaire à l'axe Z. Une couche peut être conforme, dans ce cas elle épouse la topologie de la surface sur laquelle elle repose. Lorsqu'elle consiste en plusieurs sous-couches, les sous-couches peuvent être en des matériaux différents. La ou les sous-couches s'étendent dans des plans sensiblement parallèles au plan (X, Y).

Des modes de réalisation particuliers vont être décrits se rapportant à une structure d'extraction d'un mode guidé de longueur d'onde λ comportant un guide d'onde principal et un guide d'onde intermédiaire comprenant un matériau ayant un indice de réfraction pouvant varier entre une valeur haute et une valeur basse sous l'effet d'un stimulus physique commandable. Dans ces exemples particuliers, le stimulus physique est un champ électrique et le matériau, un cristal liquide. Cependant, ces modes de réalisation peuvent être adaptés à d'autres dispositifs optoélectroniques, par exemple un commutateur optique apte à envoyer deux signaux optiques guidés par le guide d'onde principal vers deux voies de sorties distinctes et à basculer simultanément chaque signal optique d'une voie de sortie à l'autre. Dans cet exemple, les signaux optiques peuvent être de longueurs d'onde différentes et/ou de polarisation différentes.

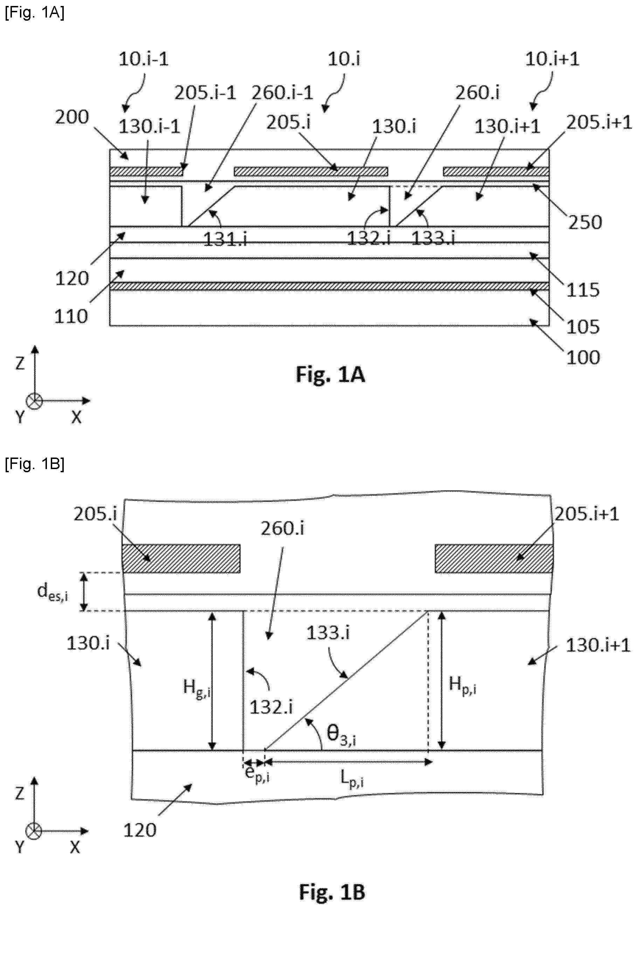

Un premier mode de réalisation d'une structure d'extraction 10.i selon l'invention va être décrite en lien avec les figures 1A et 1B. La structure d'extraction 10.i comporte un substrat support 100, un guide d'onde principal 115, un guide d'onde intermédiaire 130.i, une surface réfléchissante 133.i, une première électrode 105 et une deuxième électrode 205.i.

Par soucis de clarté, ce premier mode de réalisation, ainsi que les suivants, sont décrits pour un fonctionnement spécifique, pour lequel le mode guidé est polarisé de type transverse magnétique (TM), et la structure d'extraction est activée lorsqu'une différence de potentiel non nulle est appliquée entre la première électrode 105 et la deuxième électrode 205.i, sans que l'invention soit limitée à ce type de fonctionnement. La structure d'extraction 10.i selon l'invention peut être également apte à extraire un mode guidé polarisé de type transverse électrique (TE) lorsqu'une différence de potentiel nulle ou non-nulle est appliquée entre la première électrode 105 et la deuxième électrode 205.i. La structure d'extraction 10.i selon l'invention peut être également apte à extraire un mode polarisé de type transverse magnétique (TM) lorsque les première et deuxième électrodes sont au même potentiel. Pour certaines de ces variantes à la portée de la personne du métier, il est nécessaire de modifier l'agencement des première et deuxième électrodes (105, 205.i) par rapport au guide d'onde intermédiaire 130.i et/ou l'orientation d'un axe extraordinaire du cristal liquide en absence de champ électrique dans le cristal liquide.

Le substrat support 100 peut par exemple être issu d'une plaque, éventuellement après une étape de découpe et/ou d'amincissement. La plaque peut par exemple être une plaque en verre, en silicium ou en quartz. Le substrat support 100 peut avoir une épaisseur suffisamment fine pour pouvoir être incurvé par application d'une force. Il a une face supérieure et une face inférieure opposée à la face supérieure. Les faces inférieure et supérieure sont sensiblement planes et sensiblement parallèles entre elles. Le guide d'onde principal 115 repose sur le substrat support 100 d'un côté opposé à la face inférieure et s'étend parallèlement à la face supérieure du substrat support 100. Dans cet exemple, le guide d'onde principal 115 est rectiligne. Il peut aussi être courbe.

On définit ici et pour la suite de la description un repère direct tridimensionnel orthogonal (X, Y, Z), où les axes X et Y forment un plan parallèle à la face supérieure du substrat support 100, l'axe X étant ici parallèle au guide d'onde principal 115, et où l'axe Z est orienté de manière sensiblement orthogonale à la face supérieure du substrat support 100, depuis la face inférieure vers la face supérieure. Dans la suite de la description, les termes « vertical » et « verticalement » s'entendent comme étant relatifs à une direction sensiblement parallèle à l'axe Z, et les termes « horizontal » et « horizontalement » comme étant relatifs à une orientation sensiblement parallèle au plan (X, Y). Par ailleurs, les termes « inférieur » et « supérieur » s'entendent comme étant relatifs à un positionnement croissant lorsqu'on s'éloigne du substrat support 100, suivant la direction +Z.

Dans le repère direct tridimensionnel orthogonal (X, Y, Z), un vecteur unitaire normal à une face, une surface ou un plan a pour coordonnées sphériques : $x = \sin\theta \cos\phi$, $y = \sin\theta \sin\phi$ et $z = \cos\theta$. Dans la description, l'orientation d'une face, d'une surface ou d'un plan est définie par les coordonnées sphériques $(\theta, \phi)$ d'un vecteur unitaire normal à la face, à la surface ou au plan, tel que $\theta \in [0° ; 180°]$. On dit que la face, la surface ou le plan a pour orientation angulaire, les angles $(\theta, \phi)$. Pour un dioptre plan séparant un premier milieu d'un deuxième milieu d'indice de réfraction strictement inférieur à un indice de réfraction du premier milieu, le vecteur unitaire de référence, normal au dioptre, de coordonnées sphériques $(\theta, \phi)$ est orienté du deuxième milieu vers le premier milieu.

La première électrode 105 repose ici sur la face supérieure du substrat support 100, éventuellement séparée de celle-ci par une ou plusieurs couches, par exemple une couche électriquement isolante. La première électrode 105 est en un matériau conducteur de l'électricité, par exemple en un métal ou, en un oxide métallique, comme l'oxyde d'indium-étain (ITO) ou l'oxyde de zinc dopé à l'aluminium (AZO).

Le guide d'onde principal 115 est avantageusement un guide monomode. Il a par exemple des dimensions le long des axes Y et Z de l'ordre de la longueur d'onde $\lambda$, ou inférieures ou égales à $\lambda$, par exemple comprises entre $0{,}5\lambda$ et $1{,}5\lambda$. Le guide d'onde principal 115 est séparé de la première électrode 105 par une couche d'encapsulation inférieure 110. La couche d'encapsulation inférieure 110 est en contact physique avec la première électrode 105 et le guide d'onde principal 115. Dans cette configuration la première électrode 105 est dite enterrée. Ici, le guide d'onde principal 115 est un guide ruban, mais il peut être d'une autre type, per exemple en arête. Il est par exemple en silicium (Si) ou, comme dans cet exemple, en nitrure de silicium (SiN). La couche d'encapsulation inférieure 110 est en un ou plusieurs matériaux diélectriques transparents à la longueur d'onde $\lambda$. Le ou les matériaux diélectriques ont des indices de réfraction strictement inférieurs à un indice de réfraction du guide d'onde principal 115. Ici la couche d'encapsulation inférieure 110 est en oxyde de silicium . Elle a une épaisseur comprise entre 100 nm et 2 $\mu$m , par exemple égale à 1 $\mu$m.

Le guide d'onde intermédiaire 130.i comporte un cœur, séparé du guide d'onde principal 115 par une couche d'encapsulation supérieure 120. Le cœur s'étend parallèlement à la face supérieure du substrat support 100 depuis une extrémité 131.i vers une face de sortie 132.i. Il comprend un cristal liquide. Une portion proximale en cristal liquide du cœur est au moins en vis-à-vis du guide d'onde principal 115, c'est-à-dire qu'il existe une droite parallèle à l'axe Z passant par le cœur du guide d'onde principal 115 et par la portion proximale, pour toute section de la portion proximale parallèle au plan (Y, Z). Le guide d'onde principal 115 est de préférence entièrement en vis-à-vis de la portion proximale. Ici, l'extrémité 131.i et la face de sortie 132.i sont des interfaces entre le cristal liquide et les milieux environnant le guide d'onde intermédiaire 130.i. Dans cet exemple particulier, la portion proximale s'étend de l'extrémité 131.i à la face de sortie 132.i, de sorte que l'extrémité 131.i et la face de sortie 132.i sont en regard du guide d'onde principal 115.

Le cristal liquide a par exemple une phase nématique. Il a un indice de réfraction ordinaire (no) et un indice de réfraction extraordinaire (ne). L'indice de réfraction ordinaire (no) est l'indice de réfraction affectant une onde lumineuse se propageant dans le cristal liquide, polarisée linéairement selon une direction perpendiculaire à l'orientation moyenne des dipôles électriques de molécules du cristal liquide. L'indice de réfraction extraordinaire (ne) est l'indice de réfraction affectant une onde lumineuse se propageant dans le cristal liquide, polarisée linéairement selon une direction parallèle à l'orientation moyenne des dipôles électriques de molécules du cristal liquide. Par « orientation des molécules d'un cristal liquide », on entend l'orientation moyenne des dipôles électriques des molécules du cristal liquide présentant un dipôle électrique. En l'absence de champ électrique dans le cristal liquide, une ou plusieurs couches d'ancrage, non représentées sur les figures 1A, 1B, 2, 3, 4A, 4B et 6, orientent les molécules du cristal liquide selon une direction prépondérante, dite encore privilégiée.

Le cristal liquide est par exemple un cristal liquide 5CB (4'-Pentyl-4-biphenylcarbonitrile ou 4-Cyano-4'-pentylbiphenyl ou 4-Pentyl-4'-cyanobiphenyl). Par exemple, l'indice de réfraction ordinaire (no) est égal à 1,545 et l'indice de réfraction extraordinaire (ne) égal à 1,735 pour une longueur d'onde $\lambda$ égale à 532 nm.

La couche d'encapsulation supérieure 120 est en contact avec le guide d'onde principal 115 et le cœur du guide d'onde intermédiaire 130.i. Elle est en un ou plusieurs matériaux diélectriques transparents à la longueur d'onde $\lambda$. Le ou les matériaux diélectriques ont des indices de réfraction strictement inférieurs à un indice de réfraction du guide d'onde principal 115 et de l'indice de réfraction extraordinaire (ne) du cristal liquide. Préférentiellement, le(s) indice(s) de réfraction du (des) matériau(x) diélectrique(s) est (sont) supérieur(s) ou égal (égaux) à l'indice de réfraction ordinaire (no) du cristal liquide et inférieur(s) ou égal (égaux) à 1,1 fois l'indice de réfraction ordinaire (no) du cristal liquide. Ici la couche d'encapsulation supérieure 120 est en oxyde de silicium . Elle a par exemple une épaisseur comprise entre 10 nm et 100 nm, mesurée à l'aplomb du guide d'onde principal 115.

La deuxième électrode 205.i est agencée dans un substrat d'encapsulation 200 et s'étend parallèlement à la face supérieure du substrat support 100. Le guide d'onde principal 115 et le guide d'onde intermédiaire 130.i sont intercalés entre l'électrode enterrée 105 et la deuxième électrode 205.i. De part sa disposition par rapport au substrat support 100, dans cet exemple particulier, la deuxième électrode 205.i est dite électrode supérieure 205.i. Une partie au moins de l'électrode supérieure 205.i est en vis-à-vis de la portion proximale du coeur du guide d'onde intermédiaire 130.i et en vis-à-vis de l'électrode enterrée 105. Elle est située à une distance $d_{es,i}$ de préférence non nulle du guide d'onde intermédiaire 130.i. La distance $d_{es,i}$ est par exemple comprise entre 100 nm et 2 $\mu$m, par exemple égale à 1 $\mu$m. L'électrode supérieure 205.i est en un matériau conducteur de l'électricité, par exemple en métal ou en un oxide métallique, comme l'oxyde d'indium-étain (ITO) ou l'oxyde de zinc dopé à l'aluminium (AZO).

Le substrat d'encapsulation 200 est, dans cet exemple, transparent à la longueur d'onde $\lambda$. Il est par exemple majoritairement en silicium (Si), en germanium (Ge), ou comme dans cet exemple en quartz ou en verre.

Il peut éventuellement comprendre des couches transparentes à la longueur d'onde λ, comme par exemple une ou des couches en oxyde de silicium ou en nitrure de silicium (SiN). Le substrat d'encapsulation 200 repose sur le guide d'onde intermédiaire 130.i d'un côté opposé à l'électrode enterrée 105, par exemple en contact physique avec celui-ci ou, comme représenté ici, séparé de celui-ci par une portion d'un matériau en contact physique avec le guide d'onde intermédiaire 130.i et le substrat d'encapsulation 200. Si le matériau a un indice de réfraction supérieur ou égal à l'indice de réfraction extraordinaire (ne) du cristal liquide, la portion du matériau a préférentiellement une épaisseur inférieure à 20 nm, voire inférieure à 10 nm. L'indice de réfraction du substrat d'encapsulation 200 est strictement inférieur à l'indice de réfraction extraordinaire (ne) sur toute une région inférieure du substrat d'encapsulation 200 s'étendant depuis l'électrode supérieure 205.i jusqu'à une face inférieure du substrat d'encapsulation 200.

La surface réfléchissante 133.i est une surface sensiblement plane. Elle est positionnée en regard de la face de sortie 132.i. Elle est en contact physique avec la couche d'encapsulation supérieure 120. Comme représenté en figure 1B, la surface réfléchissante 133.i a une orientation angulaire $(\theta_{3,i}, \phi_{3,i})$ telle qu'en fonctionnement, un flux lumineux issu du mode guidé transmis au travers de la face de sortie 132.i et réfléchi par la surface réfléchissante 133.i, se propage dans le demi-espace opposé au substrat support 100 et délimité par une face supérieure du substrat d'encapsulation 200, ou dans le demi-espace opposé au substrat d'encapsulation 200 et délimité par la face inférieure du substrat support 100.

L'extrémité 131.i a pour orientation angulaire les angles $(\theta_{1,i}, \phi_{1,i})$. Avantageusement $\theta_{1,i}$ est compris dans une plage d'angle permettant un couplage adiabatique d'une partie du mode guidé depuis le guide d'onde principal 115 vers le guide d'onde intermédiaire 130.i, lorsque la structure d'extraction 10.i est activée. Dans cet exemple, ce but est atteint, lorsque $\theta_{1,i}$ est compris entre 30° et 50°, par exemple égal à 35°. Le cœur du guide d'onde intermédiaire 130.i comporte par conséquent une portion droite s'étendant de l'extrémité 131.i à la face de sortie 132.i de hauteur constante, mesurée parallèlement à l'axe Z.

La face de sortie 132.i a pour orientation angulaire les angles $(\theta_{2,i}, \phi_{2,i})$. Dans cet exemple, $\phi_{1,i} = \phi_{2,i} = \phi_{3,i} = 0$ ; $\theta_{2,i} = 90°$ ; $\theta_{3,i}$ est compris strictement entre 0° et 90°. La face de sortie 132.i est donc par conséquent orthogonale au plan (X, Y).

La surface réfléchissante 133.i a une hauteur $H_{p,i}$ supérieure ou égale à une hauteur $H_{g,i}$ du guide d'onde intermédiaire 130.i, les hauteurs étant mesurées parallèlement à l'axe Z. Avantageusement, comme dans cet exemple, $H_{p,i}$ est égal à $H_{g,i}$. La surface réfléchissante 133.i est située à une distance $e_{p,i}$ de la face de sortie 132.i, mesurée parallèlement au plan (X, Y). $e_{p,i}$ est la plus petite distance séparant la surface réfléchissante 133.i de la face de sortie 132.i dans un plan horizontal. La distance $e_{p,i}$ est par exemple inférieure à 20 nm, préférentiellement inférieure à 10 nm, avantageusement la plus petite possible, étant entendu qu'elle peut être nulle. La surface réfléchissante 133.i a une longueur $L_{p,i}$ mesurée parallèlement à l'axe X, de sorte que tan

$$\theta_{3,i} = \frac{H_{p,i}}{L_{p,i}} .$$

Avantageusement, comme cela est le cas dans cet exemple, la surface réfléchissante 133.i peut être un dioptre plan entre un premier milieu et un deuxième milieu transparents à la longueur d'onde λ. Le premier milieu est une région haut-indice 260.i s'étendant parallèlement à la face supérieure du substrat support 100 de la face de sortie 132.i jusqu'à la surface réfléchissante 133.i. La région haut-indice 260.i a un indice de réfraction strictement supérieur à un indice de réfraction du deuxième milieu. Dans cet exemple, la région haut-indice 260.i est une partie d'une couche structurée 250 reposant sur la couche d'encapsulation supérieure 120 et encapsulant le cœur du guide d'onde intermédiaire 130.i. La couche structurée 250 est en contact avec toute l'extrémité 131.i, toute la face de sortie 132.i et éventuellement avec la couche d'encapsulation supérieure 120, comme cela est représenté ici. Dans cet exemple, lorsque le substrat d'encapsulation 200 est séparé du guide d'onde intermédiaire 130.i par la portion de matériau, la couche structurée 250 comprend la portion de matériau. L'indice de réfraction de la région haut-indice 260.i est par exemple comprise entre 1,5 et 2, préférentiellement comprise entre 1,8 et 2, par exemple égal à 1,9.

Dans cet exemple, sans que cela soit indispensable, la surface réfléchissante 133.i est un dioptre entre la région haut-indice 260.i et le coeur du guide d'onde intermédiaire 130.i+1 d'une structure d'extraction supplémentaire 10.i+1 selon le premier mode de réalisation. La surface réfléchissante 133.i est coplanaire avec l'extrémité 131.i+1 du guide d'onde intermédiaire 130.i+1 de la structure d'extraction supplémentaire 10.i+1. Similairement, l'extrémité 131.i est coplanaire avec la surface réfléchissante 133.i-1 d'une autre structure d'extraction supplémentaire 10.i-1 selon le premier mode de réalisation. Ainsi, les structures d'extraction supplémentaires 10.i-1, 10.i+1 comportent respectivement des électrodes supérieures additionnelles 205.i-1, 205.i+1. La région haut-indice 260.i-1 de la structure d'extraction supplémentaire 10.i-1 s'étend depuis la face de sortie 132.i-1 du guide d'onde intermédiaire 130.i-1 de la structure d'extraction supplémentaire 10.i-1 jusqu'à l'extrémité 131.i du guide d'onde intermédiaire 130.i de la structure d'extraction 10.i.

Alternativement, la surface réfléchissante 133.i peut être une surface métallisée comprenant un métal, par exemple de l'aluminium (Al) ou de l'argent (Ag). Dans ce cas, l'indice de réfraction de la région haut-indice 260.i peut être quelconque, et préférentiellement sensiblement égal à ne.

En fonctionnement, un mode polarisé de type transverse magnétique (TM) et de longueur d'onde λ est guidé selon l'axe +X par le guide d'onde principal 115 en direction de l'extrémité 131.i du guide d'onde intermédiaire 130.i. Une différence de potentiel non nulle est appliquée entre l'électrode enterrée 105 et l'électrode supérieure 205.i de façon à créer un champ électrique suffisant pour orienter des molécules du cristal liquide parallèlement au champ électrique. L'électrode supérieure 205.i et l'électrode enterrée 105 étant en vis-à-vis et en regard de la portion proximale, le champ électrique est sensiblement parallèle à l'axe Z dans une partie substantielle de la portion proximale définissant une portion de couplage du cœur du guide d'onde intermédiaire 130.i. Les molécules du cristal liquide sont par conséquent en majorité orientées parallèlement à l'axe Z dans la portion de couplage, qui est la direction de polarisation du mode guidé.

L'épaisseur de la couche d'encapsulation supérieure 120 est suffisamment fine pour qu'une partie évanescente du mode guidé interagisse avec la portion de couplage. Du fait de l'orientation des molécules parallèles à la direction de polarisation du mode guidé, l'indice de réfraction de la portion de couplage permet à un mode excité par la partie évanescente de se propager dans le guide d'onde intermédiaire 130.i, c'est-à-dire que les constantes de propagation du mode excité et du mode guidé sont sensiblement égales dans la portion de couplage. Ainsi une partie du mode guidé est couplée optiquement au guide d'onde intermédiaire 130.i par couplage évanescent et sort par la face de sortie 132.i pour générer une onde lumineuse transmise.

L'onde lumineuse transmise se propage en espace libre dans la région haut-indice 260.i selon un axe principal jusqu'à atteindre la surface réfléchissante 133.i. Dans le cas où la surface réfléchissante 133.i est un dioptre, l'axe principal fait un angle α avec une normale à la surface plane réfléchissante 133.i supérieur ou égal à un angle d'incidence minimal sur la surface plane réfléchissante 133.i pour lequel la lumière est totalement réfléchie. Il n'est pas nécessaire de respecter cette contrainte dans le cas où la surface réfléchissante 133.i est métallisée.

Le rapport entre l'énergie de l'onde lumineuse transmise dans le guide intermédiaire sur l'énergie du mode guidé dans le guide principal définit une efficacité de couplage. L'efficacité de couplage est fonction de plusieurs facteurs comme par exemple, les indices de réfraction des guides d'onde, leur espacement... Elle dépend notamment de la longueur de la portion de couplage $L_{c,i}$. La longueur $L_{c,i}$ de la portion de couplage est aussi la longueur mesurée le long de l'axe X de la portion de proximale à l'intérieur de laquelle les constantes de propagation du mode excité et du mode guidé sont égales. La longueur $L_{c,i}$ dépend de l'agencement de l'électrode enterrée 105 et de l'électrode supérieure 205.i par rapport au cristal liquide. Dans cet exemple, l'électrode enterrée 105 est en vis-à-vis du cristal liquide sur toute la longueur du coeur du guide d'onde intermédiaire 130.i, l'électrode supérieure 205.i est en vis-à-vis du cristal liquide uniquement au niveau de toute la portion droite du coeur du guide d'onde intermédiaire 130.i. La longueur $L_{c,i}$ est donc ici égale à la longueur de la portion droite mesurée le long de l'axe X.

L'efficacité de couplage augmente dans un premier temps lorsque la longueur $L_{c,i}$ augmente depuis une longueur nulle pour atteindre un maximum de l'efficacité de couplage pour une longueur $L_c$, appelée longueur de couplage optimale. Elle peut ensuite diminuer lorsque la longueur $L_{c,i}$ augmente davantage, pour augmenter à nouveau et ainsi de suite. La longueur de couplage optimale $L_c$ augmente avec l'épaisseur de la couche d'encapsulation supérieure 120. Elle peut être déterminée par simulation. Pour certaines applications, comme par exemple pour tester une puce photonique, il peut être souhaité une efficacité de couplage faible, par exemple inférieure ou égal à 5 %. Pour d'autres applications, comme par exemple les micro-écrans, il peut être souhaité une efficacité de couplage plus importante, voire maximale. La longueur $L_{c,i}$ peut alors être ajustée en conséquence.

Optionnellement, en amont de la portion de couplage par rapport à la direction de propagation du mode guidé, une autre partie évanescente du mode guidé interagit avec une portion de couplage adiabatique du coeur du guide d'onde intermédiaire 130.i de façon à exciter un mode fondamental du guide d'onde intermédiaire 130.i. La portion de couplage adiabatique comprend l'extrémité 131.i. L'extrémité 131.i étant inclinée par rapport au plan (X, Y), la surface d'une section transversale du coeur augmente progressivement en direction de la portion de couplage de sorte que l'indice effectif du mode fondamental dans le guide d'onde intermédiaire 130.i atteint celui du mode guidé. Il peut donc se propager dans le guide d'onde intermédiaire 130.i et favoriser le transfert d'énergie du couplage évanescent vers ce mode fondamental au niveau de la portion de couplage. Ainsi l'onde lumineuse guidée dans le guide principal ne subit pas une discontinuité d'indice perçu au niveau de sa partie évanescente, ce qui réduit les pertes de la structure d'extraction 10.i. La partie de l'énergie du mode guidé transférée au mode fondamentale au niveau de la portion de couplage adiabatique participe à augmenter l'efficacité de couplage du guide d'onde principal 115 vers le guide d'onde intermédiaire 130.i.

Inversement, lorsqu'une différence de potentiel nulle est appliquée entre l'électrode enterrée 105 et l'électrode supérieure 205.i, le champ électrique est sensiblement nul à l'intérieur du cristal liquide. Les molécules du cristal liquide sont par conséquent en majorité orientées parallèlement à une direction favorisée par une ou des couches d'ancrage, parallèle au plan (X, Y), ici parallèle à l'axe Y. Du fait de cette orientation des molécules, le mode guidé interagit avec un milieu d'indice de réfraction égal à l'indice de réfraction ordinaire (no) dans la portion de couplage et aucun mode du guide d'onde intermédiaire 130.i n'est excité, ni guidé. Ainsi, le mode guidé reste confiné dans le guide d'onde principal 115.

Le dimensionnement des éléments de la structure d'extraction 10.i peut être optimisé à l'aide d'outils de simulation de la propagation d'ondes électromagnétiques mettant en œuvre des algorithmes tels que la FDTD (Finite Difference Time Domain, en anglais), la FDE (Finite Difference Eigenmode, en anglais) ou l'EME (Eigen Mode Expension, en anglais). Le comportement du cristal liquide, et donc son indice de réfraction, lors de l'application d'une différence de potentiel entre l'électrode enterrée 105 et l'électrode supérieure 205.i, peut être déduit de résultats de simulation obtenus par une méthode par éléments finis, comme celle proposée par le logiciel du commerce COMSOL®.

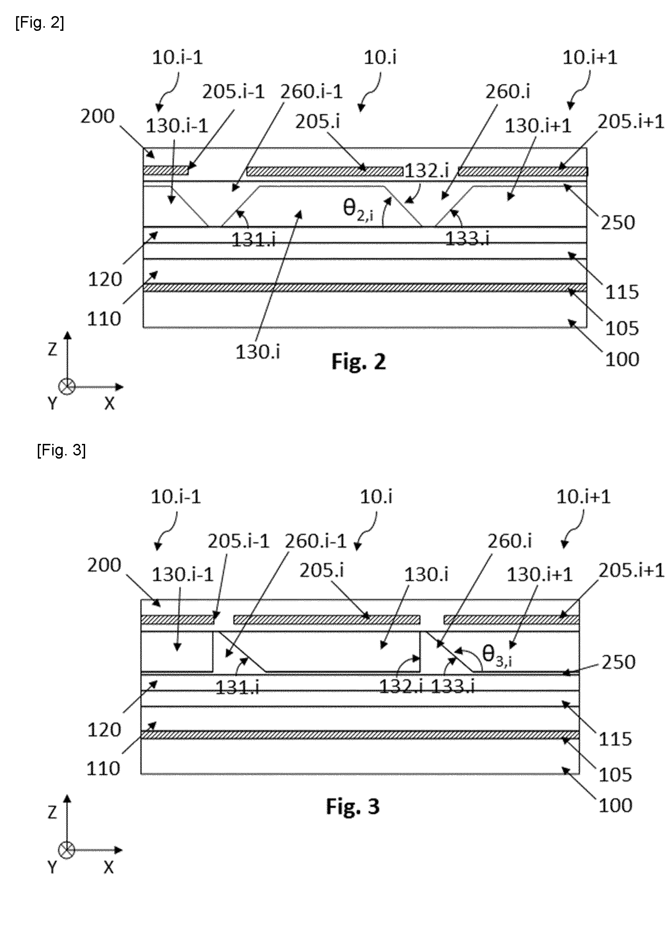

A présent, un deuxième mode de réalisation va être décrit en lien avec la figure 2, pour lequel le mode guidé peut se propager dans deux directions opposées du guide d'onde principal 115. Seules les différences avec le premier mode de réalisation sont explicitement décrites.

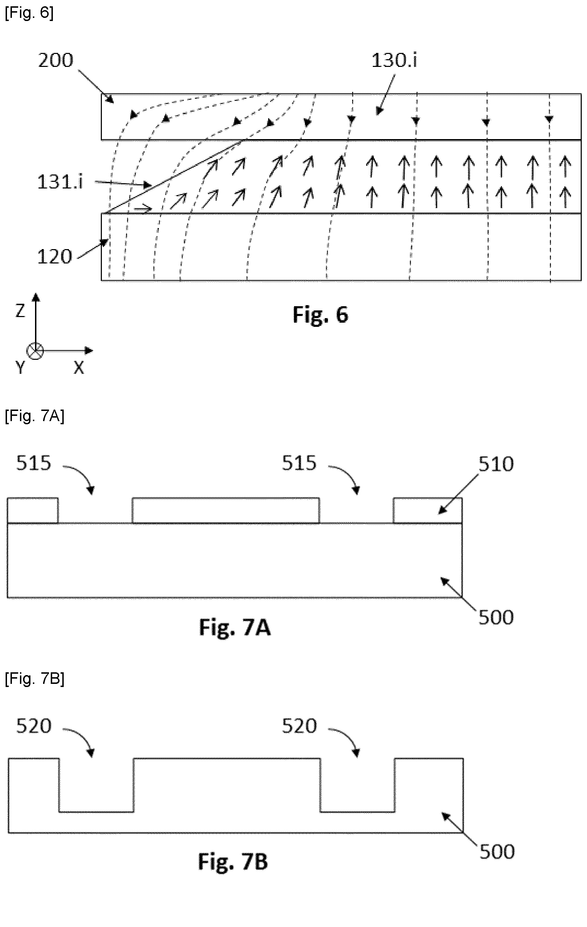

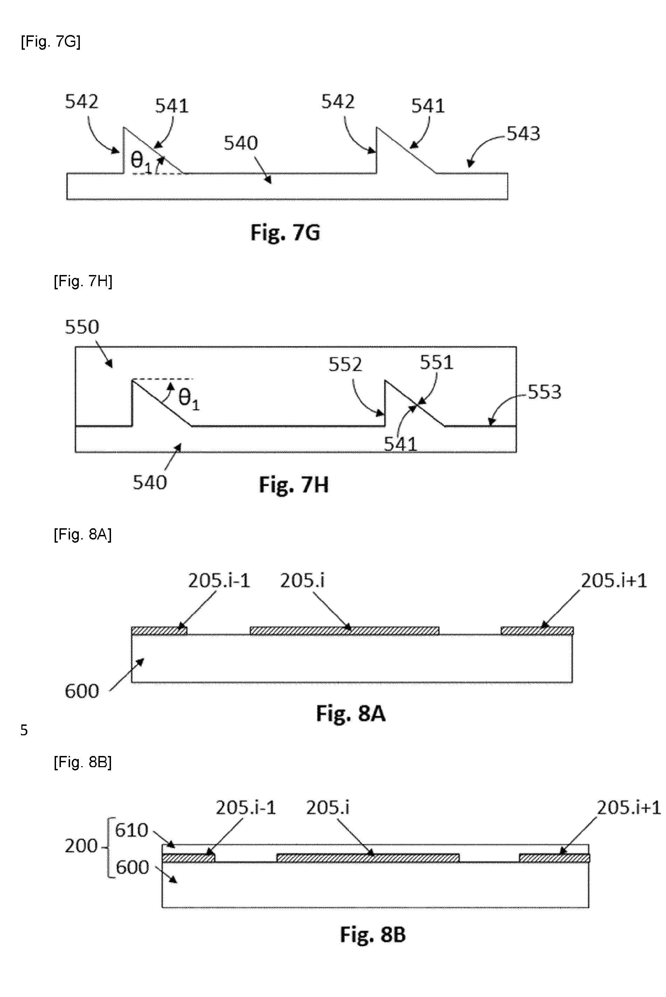

Dans ce mode de réalisation, $\theta_{2,i}$ est strictement inférieur à 90° et strictement supérieur à 0°. Celui-ci facilite la fabrication d'un moule de référence 540 et d'un moule tampon 550 avec le procédé de fabrication des figures 7A à 7H, et facilite la fabrication d'une partie supérieure de la structure d'extraction 10.i selon le procédé de fabrication des figures 8A à 8D. L'angle $\theta_{2,i}$ est par exemple sensiblement égal à l'angle $\theta_{3,i}$.

Un troisième mode de réalisation va être décrit en lien avec la figure 3. Seules les différences avec le premier mode de réalisation sont explicitement décrites.

Dans ce mode de réalisation, l'électrode enterrée 105 et le substrat support 100 sont transparents à la longueur d'onde λ. $\Theta_{3,i}$ est strictement supérieur à 90°. Ainsi, la surface réfléchissante 133.i oriente l'onde lumineuse transmise en direction du substrat support 100, après réflexion, pour l'extraire au travers de la face inférieure du substrat support 100.

Les premier, deuxième et troisième modes de réalisation ont été décrits en lien avec un mode guidé de polarisation TM, extrait lorsqu'une différence de potentiel non nulle est appliquée entre la première électrode 105 et la deuxième électrode 205.i.

Pour extraire un mode guidé TM uniquement lorsqu'une différence de potentiel nulle est appliquée entre la première électrode 105 et la deuxième électrode 205.i sont par exemple agencées toutes les deux, dans un plan parallèle au plan (X, Y) dans le substrat d'encapsulation 200, l'une en regard d'une région amont du guide d'onde intermédiaire 130.i et l'autre en regard d'une région aval du guide d'onde intermédiaire 130.i, plus proche de la face de sortie 132.i que la région amont. La direction favorisée par la ou les couche(s) d'ancrage(s) peut être parallèle à l'axe Z. Cette configuration est couramment décrite sous la dénomination anglaise « in plane switching (IPS) ».

Pour extraire un mode guidé TE uniquement lorsqu'une différence de potentiel nulle est appliquée entre la première électrode 105 et la deuxième électrode 205.i, la première électrode 105 et l'électrode supérieure 205.i peuvent par exemple être agencées de la même façon que sur les figures 1 à 3, et la direction favorisée par la ou les couche(s) d'ancrage(s) peut être parallèle à l'axe Y.

Pour extraire un mode guidé TE uniquement lorsqu'une différence de potentiel non nulle est appliquée entre la première électrode 105 et la deuxième électrode 205.i, la première électrode 105 et la deuxième électrode 205.i sont par exemple agencées toutes les deux dans un plan parallèle au plan (X, Y) dans le substrat d'encapsulation 200, de part et d'autre d'un plan orthogonal au plan (X, Y) comprenant un axe optique du guide d'onde principal 115. La direction favorisée par la ou les couche(s) d'ancrage(s) peut être parallèle à l'axe X.

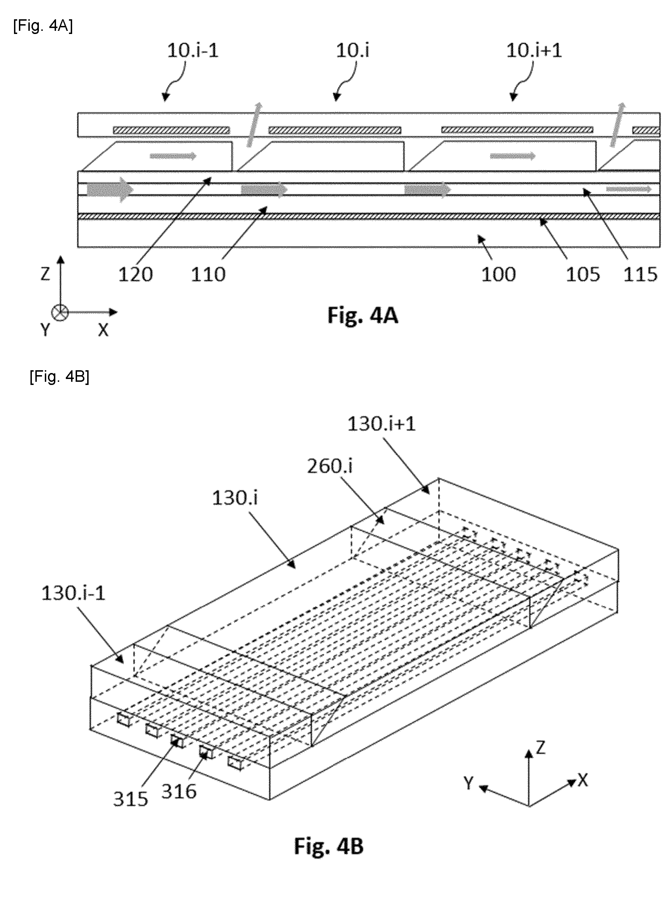

Un dispositif optique mettant en œuvre des structures d'extraction 10.i selon le premier mode de réalisation va à présent être décrit, en lien avec les figures 4A et 4B. Alternativement, ce dispositif optique peut mettre en œuvre des structures d'extraction 10.i selon le deuxième mode de réalisation et/ou selon le troisième mode de réalisation, éventuellement en combinaison avec une ou plusieurs structures d'extraction 10.i selon le premier mode de réalisation. Les orientations des dioptres représentées sur ces figures ne constituent qu'un cas particulier ; d'autres orientations peuvent être envisagées sur la base de l'enseignement des premier, deuxième et troisième modes de réalisations.

La figure 4A est une vue transversale en coupe de la vue en perspective de la figure 4B, passant par un axe optique d'un premier guide d'onde principal 315. Un exemple de propagation d'un flux lumineux est représenté schématiquement sur la figure 4A sous la forme de flèches grises. Les largeurs des flèches illustrent schématiquement les énergies relatives du flux lumineux dans les différentes branches du dispositif optique pour un fonctionnement particulier du dispositif optique.

Le dispositif optique comprend un premier guide d'onde principal 315 et au moins un deuxième guide d'onde principal 316. Le deuxième guide d'onde principal 316 s'étend ici parallèlement au guide d'onde principal 315 dans un plan coplanaire avec le guide d'onde principal 315. Dans cet exemple, sans que cela soit essentiel, les premier et deuxième guides d'onde principaux 315, 316 sont rectilignes.

Le dispositif optique comporte un premier groupe de plusieurs structures d'extraction 10.i selon le premier mode de réalisation, partageant le substrat support 100, tel que le guide d'onde principal 115 de chaque structure d'extraction est une portion du premier guide d'onde principal 315. Une structure d'extraction 10.i est ici intercalée entre deux structures d'extraction supplémentaires 10.i-1, 10.i+1 selon le même mode de réalisation que celui de la structure d'extraction 10.i, ici du premier mode de réalisation. L'extrémité 131.i+1 de la structure d'extraction supplémentaire 10.i+1 est la surface réfléchissante 133.i de la structure d'extraction 10.i. De même, l'extrémité 131.i de la structure d'extraction 10.i est la surface réfléchissante 133.i-1 de la structure d'extraction supplémentaire 10.i-1.

Alternativement, la surface réfléchissante 133.i-1 d'une structure d'extraction 10.i-1 peut être une interface, éventuellement métallisée, entre la région haut-indice 260.i-1 et un deuxième milieu quelconque, par exemple une colle. La colle peut être une colle UV. Le deuxième milieu peut s'étendre sur la couche d'encapsulation supérieure 120 et avoir une épaisseur mesurée parallèlement à l'axe Z sensiblement égale à la hauteur $H_{g,i-1}$ du guide d'onde intermédiaire 130.i-1 de la structure d'extraction 10.i-1.

Dans cet exemple, la structure d'extraction supplémentaire 10.i-1 est destinée à être activée et désactivée simultanément avec une autre structure d'extraction, ici la structure d'extraction supplémentaire 10.i+1. La longueur $L_{c,,i-1}$ de la portion de couplage de la structure d'extraction supplémentaire 10.i-1 est ici strictement inférieure à la longueur $L_{c,i+1}$ de la portion de couplage de la structure d'extraction supplémentaire 10.i+1. De préférence, une différence entre les longueurs $L_{c,i-1}$ et $L_{c,i+1}$ est telle que les ondes lumineuses transmises par les structures d'extraction supplémentaires 10.i-1, 10.i+1 ont des intensités égales. La différence de longueurs pour atteindre ce but peut être établie par mesures photométriques de structures de test ou par simulation. Dans ce cas préférentiel, les structures d'extraction supplémentaires 10.i-1, 10.i+1 peuvent, par exemple, être des structures d'extraction de points d'émission d'un micro-écran appartenant à un ensemble de points d'émission correspondant à un pixel d'une image.

Dans le cas où plusieurs structures d'extraction 10.i du premier groupe sont destinées à être activées simultanément, la longueur $L_{c,i}$ de la portion de couplage de la structure d'extraction 10.i située la plus en aval par rapport à la progression du mode guidé est de préférence égale à la longueur de couplage optimale $L_c$, notamment pour une application de type micro-écran.

Ici, le dispositif optique comporte en outre un deuxième groupe de plusieurs structures d'extraction 10.i selon le premier mode de réalisation, partageant le substrat support 100, tel que le guide d'onde principal 115 de chaque structure d'extraction est une portion du deuxième guide d'onde principal 316. Tout comme pour le premier groupe de structures d'extraction, une structure d'extraction 10.i du deuxième groupe est intercalée entre deux structures d'extraction supplémentaires 10.i-1, 10.i+1 du deuxième groupe. Plus précisément, l'extrémité 131.i+1 de la structure d'extraction supplémentaire 10.i+1 est, dans cet exemple, la surface réfléchissante 133.i de la structure d'extraction 10.i. De même, l'extrémité 131.i de la structure d'extraction 10.i est la surface réfléchissante 133.i-1 de la structure d'extraction supplémentaire 10.i-1. Le dispositif optique peut comporter un nombre quelconque de groupes, chacun comportant une pluralité de structures d'extraction 10.i.

Dans cet exemple, le guide d'onde intermédiaire 130.i de chaque structure d'extraction 10.i du premier groupe et du deuxième groupe est un guide d'onde planaire. Plus exactement, le guide d'onde intermédiaire 130.i de chaque structure d'extraction 10.i du premier groupe constitue, avec le guide d'onde intermédiaire 130.i d'une structure d'extraction 10.i correspondante du deuxième groupe, deux parties d'un guide d'onde intermédiaire 130.i commun et planaire. Le guide d'onde intermédiaire 130.i commun est en vis-à-vis du premier guide d'onde principal 315 et du deuxième guide d'onde principal 316. Ici, l'extrémité 131.i de chaque structure d'extraction 10.i du premier groupe est coplanaire avec l'extrémité 131.i de la structure d'extraction 10.i correspondante du deuxième groupe. De même, la face de sortie 132.i de chaque structure d'extraction 10.i du premier groupe est coplanaire avec la face de sortie 132.i de la structure d'extraction 10.i correspondante du deuxième groupe. A noter qu'il est possible d'activer indépendamment l'une de l'autre, deux structures d'extraction 10.i partageant un guide d'onde intermédiaire 130.i commun, les portions de couplage respectives pouvant être délimitées par la géométrie des électrodes supérieures 205.i. C'est-à-dire qu'une différence de potentiel électrique appliquée entre une électrode supérieure 205.i et l'électrode enterrée 105 peut orienter les molécules du cristal liquide dans une portion de couplage correspondante, sans affecter l'orientation des molécules dans les autres portions de couplage du guide d'onde intermédiaire 130.i commun. Un nombre quelconque de structures d'extraction 10.i appartenant à des groupes de structures d'extraction 10.i distincts peuvent avoir leurs guides d'onde intermédiaire 130.i respectifs compris dans le guide d'onde intermédiaire 130.i commun. Dans cet exemple, 5 structures d'extraction 10.i appartenant à des groupes distincts partagent un guide d'onde intermédiaire 130.i planaire commun.

Les électrodes enterrées 105 des structures d'extraction du premier groupe et/ou du deuxième groupe peuvent être, chacune, une portion d'une électrode enterrée commune s'étendant continument dans un plan parallèle au plan (X, Y). L'électrode commune peut être connectée électriquement à un potentiel électrique fixe, par exemple à la masse.

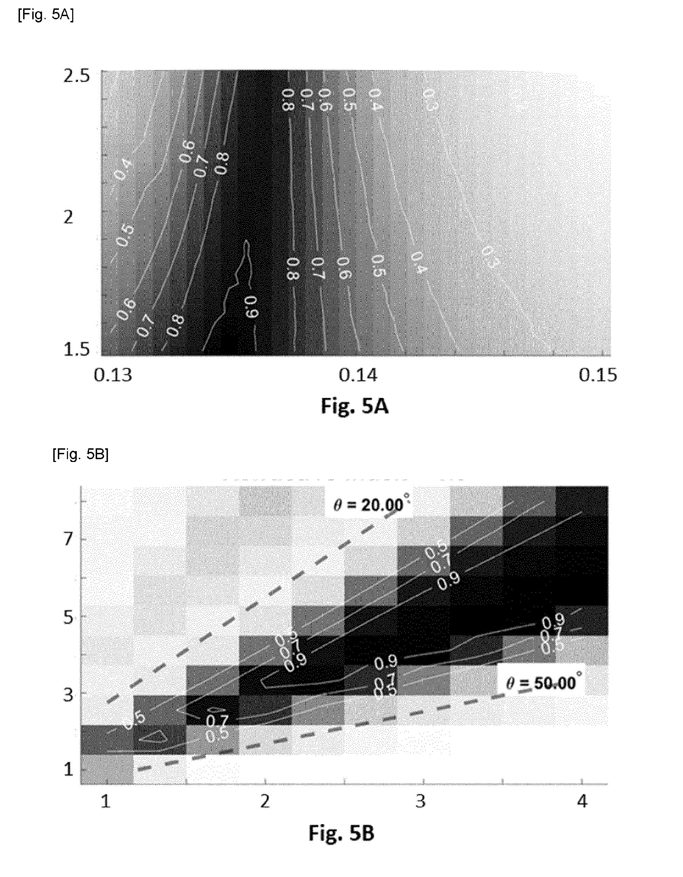

En lien avec les figures 5A à 5D, des résultats de simulation vont être décrits. Ces résultats sont utiles au dimensionnement d'une structure d'extraction 10.i selon l'invention.

En figure 5A, il est représenté une cartographie en deux dimensions donnant le rapport de l'énergie de l'onde lumineuse transmise dans le guide d'onde intermédiaire sur l'énergie initiale du mode guidé principal (lignes iso-valeur blanches), en fonction de la hauteur du guide d'onde principal 115 mesurée le long de l'axe Z (axe des abscisses, en µm) et de la hauteur $H_{g,i}$ du guide d'onde intermédiaire 130.i (axe des ordonnées, en µm).

Pour ces résultats de simulation, la couche d'encapsulation supérieure 120 est en oxyde de silicium et a une épaisseur égale à 100 nm. La longueur d'onde λ est égale à 532 nm. La longueur $L_{c,i}$ de la portion de couplage est en chaque point égale à la longueur de couplage optimale $L_c$. Le cristal liquide est un 5CB. Le guide d'onde principal 115 est en nitrure de silicium (SiN). Le mode guidé est un mode polarisé de type transverse magnétique (TM). Ces résultats montrent qu'il est possible d'ajuster l'efficacité de couplage maximal sur une grande plage de valeurs. L'efficacité de couplage maximal peut être supérieure à 0,9.

En figure 5B, il est représenté une cartographie en deux dimensions donnant le rapport de l'énergie de l'onde lumineuse transmise après réflexion par la surface réfléchissante 133.i sur l'énergie de l'onde lumineuse transmise dans le guide intermédiaire (lignes iso-valeur blanches), en fonction de la hauteur $H_{p,i}$ (axe des abscisses, en $\mu$m) et de la longueur $L_{p,i}$ (axes des ordonnées, en $\mu$m) de la surface réfléchissante 133.i. Pour ces résultats de simulation $\phi_{3,i}$ est égal à 0° et $\theta_{3,i}$ est variable et égal à $\tan^{-1} \frac{H_{p,i}}{L_{p,i}}$, comme précisé supra. Deux lignes en pointillés situent les angles $\theta_{3,i}$ égaux respectivement, à 20° et 50°. La région haut-indice 260.i comprend de l'oxyde de titane (TiO2) et a un indice de réfraction égal à 1,9. Le cristal liquide est un 5CB. La hauteur $H_{g,i}$ du guide d'onde intermédiaire 130.i est égale à la hauteur $H_{p,i}$ de la surface réfléchissante 133.i. La surface réfléchissante 133.i est un dioptre séparant la région haut-indice 260.i d'un deuxième milieu d'indice de réfraction égal à l'indice de réfraction ordinaire (no) du cristal liquide. Le mode guidé est un mode polarisé de type transverse magnétique (TM). La longueur d'onde λ est égale à 532 nm. Ces résultats montrent qu'il est possible de déterminer une valeur de $\theta_{3,i}$ maximisant le pouvoir réflecteur de la surface réfléchissante 133.i.

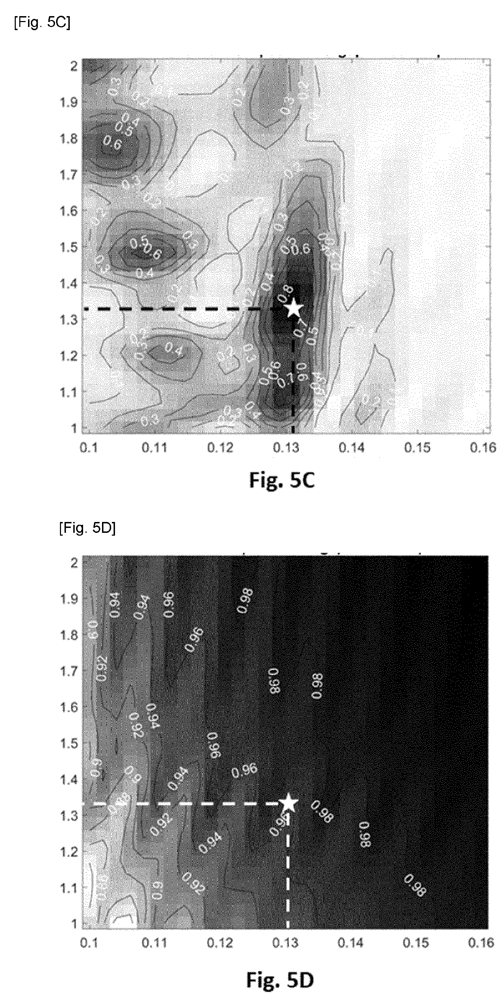

La figure 5C est le résultat de la combinaison des figures 5A et 5B pour une longueur $L_{p,i}$ de la surface réfléchissante 133.i fixée à 2 $\mu$m. Il est ici représenté une cartographie en deux dimensions donnant le rapport de l'énergie de l'onde lumineuse transmise après réflexion par la surface réfléchissante 133.i sur l'énergie du mode guidé (lignes iso-valeur noires), en fonction de la hauteur du guide d'onde principal 115 (axe des abscisses, en $\mu$m) et de la hauteur $H_{p,i}$ (axe des ordonnées, en $\mu$m) de la surface réfléchissante 133.i. La hauteur $H_{p,i}$ étant par ailleurs égale à la hauteur du guide d'onde intermédiaire 130.i. Les autres paramètres pour l'obtention de ces résultats de simulation prennent les mêmes valeurs que celles mentionnées en lien avec la figure 5A et la figure 5B. Un maximum égal à 90 % (étoile blanche) est atteint pour une hauteur du guide d'onde principal 115 égale à 130 nm, une hauteur du guide d'onde intermédiaire 130.i égale à 1,32 $\mu$m, une épaisseur de la couche d'encapsulation supérieure 120 égale à 100 nm et une inclinaison de la surface réfléchissante 133.i égale à

$$\theta_{3,i} = \tan^{-1} \frac{1,32}{2} = 33°.$$

La polarisation de type TM du mode guidé est avantageuse lorsque l'onde lumineuse transmise est extraite au travers de la face supérieure du substrat d'encapsulation 200 ou au travers de la face inférieure du substrat support 100 vers un milieu environnant de faible indice de réfraction, comme par exemple un gaz ou de l'air. Dans ce cas, la réflexion de l'onde lumineuse à l'interface entre le milieu environnant et respectivement le substrat d'encapsulation 200 ou le substrat support 100 est réduite, par exemple 5 fois inférieure, voire 6 fois inférieure que la réflexion obtenue avec un mode guidé de type TE.

En figure 5D, il est représenté une cartographie en deux dimensions donnant le rapport de l'énergie du mode guidé en aval de la structure d'extraction 10.i sur l'énergie du mode guidé en amont de la structure d'extraction 10.i (lignes iso-valeur noires), en fonction de la hauteur du guide d'onde principal 115 (axe des abscisses, en $\mu$m) et de la hauteur $H_{p,i}$ (axe des ordonnées, en $\mu$m) de la surface réfléchissante 133.i. Les résultats de simulation sont obtenus lorsque l'électrode enterrée 105 et l'électrode supérieure 205.i sont au même potentiel électrique. Le point de fonctionnement repéré sur la figure 5C est reporté sur la figure 5D, pour lequel 96 % de l'énergie du mode guidé reste confiné dans le guide d'onde principal 115 au passage de la structure d'extraction 10.i.

En figure 6, il est représenté une cartographie obtenue par simulation du champ électrique (lignes orientées en pointillés) à l'intérieur d'une région du premier mode de réalisation incluant l'extrémité 131.i du guide d'onde intermédiaire 130.i. Pour ces résultats de simulation, la direction favorisée par la ou les couches d'ancrage est parallèle à l'axe X. La distance $d_{es,i}$ est égale à 1 $\mu$m. L'épaisseur de la couche d'encapsulation inférieure 110 est égale à 1 $\mu$m. Une différence de potentiel électrique égale à 5 V est appliquée entre l'électrode supérieure 205.i et l'électrode enterrée 105. L'électrode supérieure 205.i n'est ici pas en regard de l'extrémité 131.i. Par conséquent, une région de section triangulaire rectangle dans un plan parallèle au plan (X, Z), délimitée par l'extrémité 131.i et une face inférieure du guide d'onde intermédiaire 130.i, a un indice de réfraction intermédiaire, variable dans une plage de valeurs incluse entre l'indice de réfraction ordinaire (no) et l'indice de réfraction extraordinaire (ne). L'indice de réfraction augmente graduellement en s'éloignant de l'extrémité 131.i ce qui favorise la formation d'une région de couplage adiabatique. Cela permet également de limiter un effet de diffraction du mode guidé à l'interface entre le région haut-indice 260.i et le cristal liquide, au niveau de l'extrémité 131.i.

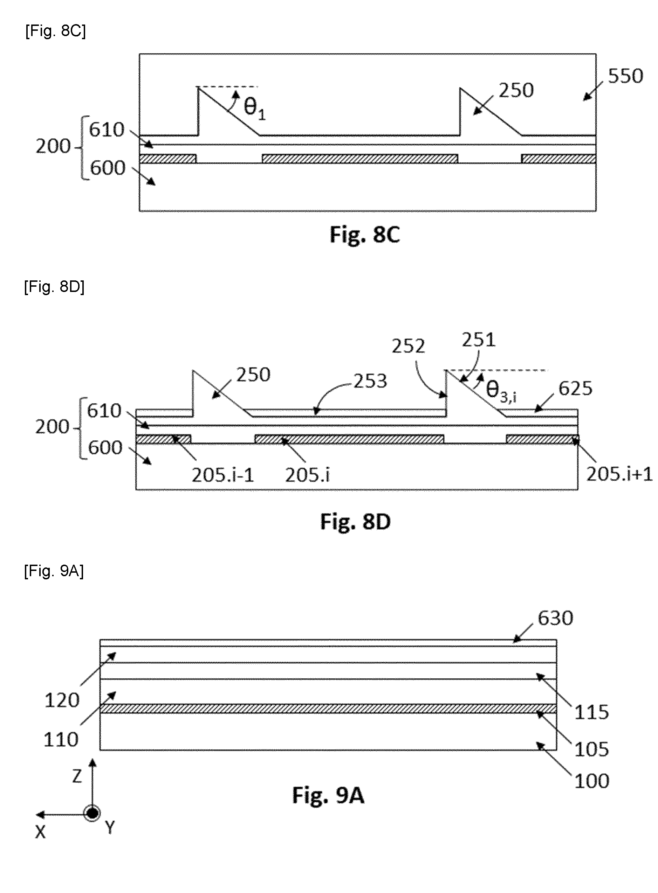

Un exemple de procédé de réalisation d'une structure d'extraction 10.i telle qu'illustrée sur la figure 1A ou la figure 2 est maintenant décrit. Ce procédé comprend la fabrication d'un moule de référence 540 et d'un moule tampon 550 (figures 7A à 7H), la fabrication d'une partie supérieure de la structure d'extraction 10.i (figures 8A à 8D) et la fabrication proprement dite de la structure d'extraction 10.i intégrant la partie supérieure (figures 9A à 9C).

En figure 7A, une résine photosensible est déposée sur un substrat temporaire 500. La résine photosensible est insolée localement et développée pour obtenir un masque 510 en contact avec le substrat temporaire 500. Alternativement, le masque 510 peut être une couche structurée minérale, par exemple en nitrure de silicium (SiN) ou en oxyde de silicium , obtenue par des étapes de photolithographie et de gravure. Le masque 510 comporte des ouvertures 515 traversant de part en part le masque 510 pour exposer des régions d'une face supérieure du substrat temporaire 500. Le substrat temporaire 500 peut être un substrat en silicium, par exemple une plaque de silicium, par exemple de diamètre 150 mm, 200 mm ou 300 mm. Les ouvertures 515 ont par exemple des formes rectangulaires dans un plan parallèle à la face supérieure du substrat temporaire 500. Dans cet exemple particulier, les ouvertures 515 sont rectangulaires et s'étendent dans le sens de leurs longueurs selon une direction commune.

En figure 7B, on grave partiellement le substrat temporaire 500 au travers des ouvertures 515 pour obtenir des tranchées 520. La gravure est une gravure anisotropique, par exemple une gravure ionique réactive. Les tranchées 520 ont chacune un fond et des parois sensiblement orthogonales au fond. Elles ont sensiblement la même profondeur, par exemple supérieure ou égale à 10 $\mu$m, par exemple comprise entre 20 $\mu$m et 25 $\mu$m.

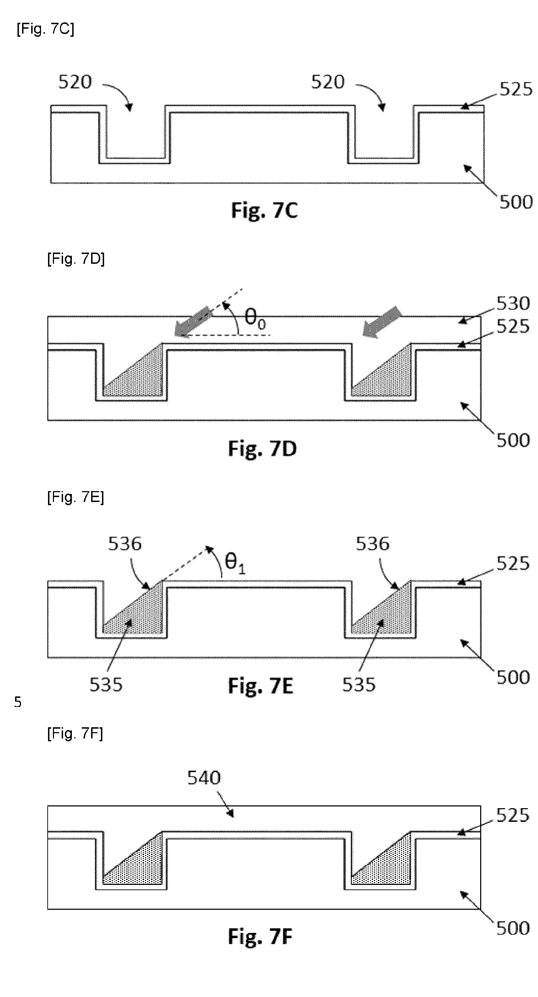

En figure 7C, on dépose de façon conforme, par exemple par PVD ou CVD, une couche absorbante 525 sur la face supérieure du substrat temporaire 500, ainsi que sur les fonds et les parois des tranchées 520. La couche absorbante 525 est optionnelle. Lorsqu'elle est présente, la couche absorbante 525 peut comprendre une alternance de sous-couches en chrome (Cr) et en oxyde de silicium .

En figure 7D, une résine photosensible positive 530 est déposée sur la couche absorbante 525, ou directement sur le substrat temporaire 500 lorsque la couche absorbante 525 est absente. La résine photosensible positive 530 remplit totalement les tranchées 520, avantageusement elle recouvre la face supérieure du substrat temporaire 500. La résine photosensible positive 530 est ensuite insolée par une lumière collimatée se propageant dans la résine photosensible positive 530 selon une direction faisant un angle $\theta_0$ compris strictement entre 0° et 90° avec la face supérieure du substrat temporaire 500, ceci afin d'insoler une partie seulement de la résine photosensible positive 530 à l'intérieur des tranchées 520. L' angle $\theta_0$ est préférentiellement compris entre 30 degrés et 60 degrés, ou 30 degrés et 50 degrés. Dans cet exemple, la direction de la lumière collimatée est orthogonale à la direction commune.

En figure 7E, la résine photosensible positive 530 est développée. A l'issue de cette étape, des parties résiduelles 535, non insolées, de la résine photosensible positive 530 demeurent à l'intérieur des tranchées 520. Chaque partie résiduelle 535 recouvre le fond, de préférence entièrement, d'une tranchée 520 respective. Chaque partie résiduelle 535 comporte une face inclinée 536 faisant un angle $\theta_1$ non nul avec la face supérieure du substrat temporaire 500, sensiblement égal à $\theta_0$. La face inclinée 536 affleure la face supérieure du substrat temporaire 500, et recouvre le fond de la tranchée 520 correspondante. La présence d'une couche absorbante 525 lors de l'insolation de la résine photosensible positive 530 évite la formation de franges d'interférences induites par une réflexion sur les parois des tranchée 520. Les faces inclinées 536 sont alors plus lisses.

En figure 7F, une couche non conforme est formée sur le substrat temporaire 500 pour réaliser un moule de référence 540. La couche peut être une couche métallique, par exemple en nickel (Ni). Elle peut être déposée par CVD ou PVD. Elle peut aussi être obtenue par un procédé de croissance par galvanoplastie, éventuellement précédé par le dépôt conforme d'un germe conducteur de l'électricité. Dans le cas où la couche absorbante 525 est présente et comprend une alternance de sous-couches en chrome (Cr) et en oxyde de silicium , la couche peut avantageusement être crue par galvanoplastie à partir d'une sous-couche de chrome (Cr) terminant l'alternance de sous-couches de la couche absorbante 525.

En figure 7G, le moule de référence 540 est retiré. Le moule de référence 540 comporte des parties saillantes, en relief par rapport à une face principale 543 du moule de référence 540. Chaque partie saillante comprend une face inclinée 541 et une face droite 542. Les faces inclinées 541 correspondent chacune à une face inclinée 536 d'une partie résiduelle 535. Les faces droites 542 correspondent chacune à une paroi d'une tranchée 520. Dans cet exemple, les parties saillantes constituent des prismes droits de section triangulaire rectangle. Ainsi, chaque face inclinée 541 définit une arête avec une face droite 542. Ici, toutes les arêtes des parties saillantes sont parallèles entre-elles et s'étendent dans un même plan parallèle à la face principale 543.

En figure 7H, une couche souple, par exemple en un élastomère comme le polydiméthylsiloxane (PDMS), est formée sur le moule de référence 540 de façon à être en contact avec les parties saillantes et la face principale 543 du moule de référence 540. La couche souple constitue un moule tampon 550 comprenant des cavités, chacune de forme correspondant à une partie saillante du moule de référence 540. Ainsi, chaque cavité comprend une face inclinée 551 et une face droite 552 correspondant respectivement à une face inclinée 541 et une face droite 542 d'une partie saillante du moule de référence 540. L'étape de la figure 7H peut être renouvelée plusieurs fois pour réaliser plusieurs moules tampons 550. Dans cet exemple, les cavités constituent des prismes droits de section triangulaire rectangle. Chaque face inclinée 551 définit une arête avec une face droite 552. Toutes les arêtes des cavités sont parallèles entre-elles et s'étendent dans un même plan parallèle à une face principale 553 du moule tampon 550 correspondant à la face principale 543 du moule de référence 540. Chaque face inclinée 551 fait un angle $\theta_1$ avec le face principale 553.

En figure 8A, une couche conductrice de l'électricité est déposée sur une face supérieure d'un support 600. Le support 600 est, dans cet exemple, en un matériau transparent à la longueur d'onde $\lambda$. Il est par exemple en silicium (Si) ou en germanium (Ge), si la longueur d'onde $\lambda$ est dans l'infrarouge. Il peut par exemple être en quartz ou en verre, si la longueur d'onde $\lambda$ est dans le spectre visible.

La couche conductrice de l'électricité peut être en un métal, ou en un oxyde métallique, comme par exemple un oxyde d'indium-étain (ITO). Elle est gravée localement sur toute son épaisseur pour réaliser des électrodes supérieures 205.i.

En figure 8B, une couche d'encapsulation 610 est formée sur le support 600, de façon à être en contact avec les électrodes supérieures 205.i et la face supérieure du support 600. La couche d'encapsulation 610 a, sur un côté opposé aux électrodes supérieures 205.i, une face plane sensiblement parallèle à la face supérieure du support 600. La couche d'encapsulation 610 est en un matériau transparent à la longueur d'onde $\lambda$. Elle est par exemple en un même matériau que le support 600. Elle est ici en oxyde de silicium . Le support 600 et la couche d'encapsulation 610 définissent ensemble le substrat d'encapsulation 200.

En figure 8C, on réalise une couche structurée 250 par un procédé de lithographie par nano-impression (NIL). Il est par exemple possible de déposer une couche de xérogel imparfaitement réticulée comprenant de l'oxyde de titane ($TiO_2$), éventuellement additionnée d'agents organiques stabilisants et/ou de fluidifiants et/ou d'inhibiteurs de polycondensation. La couche de xérogel est ensuite moulée par le moule tampon 550, éventuellement en la chauffant légèrement, pour obtenir la couche structurée 250. Au cours de cette étape, le moule tampon 550 est mis en contact du xérogel et une pression s'exerçant sur le moule tampon 550, perpendiculairement à la face supérieure du support 600 est appliquée, jusqu'à éventuellement mettre en contact le moule tampon 550 avec la couche d'encapsulation 610. Lorsque le moule tampon 550 n'est pas mis en contact avec la couche d'encapsulation 610, la pression est uniforme de façon à maintenir la face principale 553 du moule tampon 550 sensiblement parallèle avec une face supérieure de la couche d'encapsulation 610 opposée au support 600. Par conséquent, dans tous les cas, la face principale 553 du moule tampon 550 est sensiblement parallèle avec la face supérieure de la couche d'encapsulation 610 lors de la mise en forme du xérogel.

En figure 8D, une partie supérieure d'une structure d'extraction 10.i est obtenue. Le moule tampon 550 est retiré et la couche structurée 250 est chauffée à une température élevée de façon à la solidifier et à la stabiliser. Une concentration d'oxyde de titane ($TiO_2$) dans le xérogel permet d'ajuster l'indice de réfraction de la couche structurée 250, par exemple à une valeur égale à 1,9.

A l'issue de la sous-étape de chauffage, la couche structurée 250 comprend des parties saillantes correspondant chacune à une cavité du moule tampon 550. Les parties saillantes de la couche structurée 250 ont donc par conséquents des arêtes correspondant aux arêtes des cavités. La face principale 553 du moule tampon 550 étant parallèle avec la face supérieure de la couche d'encapsulation 610, les arêtes des parties saillantes de la couche structurée 250 sont coplanaires et parallèles à la face supérieure de la couche 610. Les parties saillantes de la couche structurée 250 ont par conséquent des hauteurs identiques, égales à une hauteur commune.

Dans cet exemple, le moule tampon 550 n'a pas été mis en contact avec la couche d'encapsulation 610, de sorte que les parties saillantes de la couche structurée 250 sont en relief par rapport à une face principale 253 de la couche structurée 250. Chaque partie saillante comprend une face inclinée 251 destinée à être une extrémité 131.i et/ou une surface réfléchissante 133.i d'une structure d'extraction 10.i. Elle comporte également une face droite 252 destinée à être une face de sortie 132.i d'une structure d'extraction 10.i. La face inclinée 251 fait un angle $\theta_{3,i}$ avec la face principale 253 qui peut être différent de $\theta_1$. L'angle $\theta_{3,i}$ croit lorsque $\theta_1$, et donc $\theta_0$, augmentent.

Une couche de polyimide est ensuite formée en contact de la face principale 253, ou en contact de la couche d'encapsulation 610 lorsque le moule tampon 550 a été mis au contact de celle-ci lors de l'étape de lithographie par nano-impression. La couche de polyimide est brossée dans le sens d'une direction destinée à être une direction favorisée pour l'orientation des molécules du cristal liquide lorsqu'aucun champ électrique n'est présent dans le cristal liquide. La couche de polyimide est ainsi destinée à être une couche d'ancrage supérieure 625 du cristal liquide.

En figure 9A, on fabrique une partie inférieure d'une structure d'extraction 10.i. On dépose une couche conductrice de l'électricité sur une face supérieure d'un substrat support 100. Le substrat support 100 peut par exemple être en silicium, par exemple une plaque de silicium. La couche conductrice de l'électricité peut être en un métal, ou en un oxyde métallique, comme par exemple un oxyde d'indium-étain (ITO). Elle est gravée localement sur toute son épaisseur pour réaliser une électrode enterrée 105.

Une couche d'encapsulation inférieure 110 est ensuite déposée sur le substrat support 100, en contact avec le substrat support 100 et l'électrode enterrée 105.

La couche d'encapsulation inférieure 110 est par exemple en oxyde de silicium . Elle peut être polie, par exemple par un polissage mécano-chimique.

Une couche diélectrique ou semiconductrice est ensuite formée sur le substrat support 100, par une technique de report de couche ou par un dépôt, éventuellement suivi d'une étape de planarisation, par exemple par polissage mécano-chimique. La couche est ensuite gravée localement sur toute sa hauteur pour obtenir le coeur d'un guide d'onde principal 115.

Une couche d'encapsulation supérieure 120 est ensuite déposée sur la couche d'encapsulation inférieure 110, en contact avec couche d'encapsulation inférieure 110 et le guide d'onde principal 115. La couche d'encapsulation supérieure 120 est par exemple en oxyde de silicium . Elle peut être polie, par exemple par un polissage mécano-chimique.

Une couche de polyimide additionnelle est ensuite formée en contact avec la couche d'encapsulation supérieure 120, sur une partie au moins de la couche d'encapsulation supérieure 120. La couche de polyimide additionnelle est brossée dans le sens d'une direction destinée à une direction favorisée pour l'orientation des molécules du cristal liquide lorsqu'aucun champ électrique n'est présent dans le cristal liquide. La couche de polyimide additionnelle est ainsi destinée à être une couche d'ancrage inférieure 630 du cristal liquide.

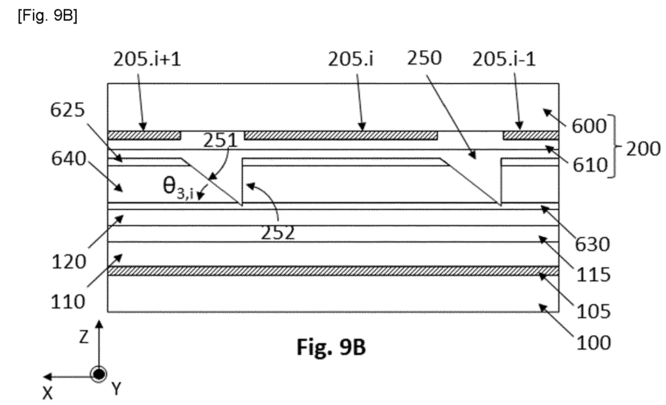

En figure 9B, un cordon de colle (non représenté) est formé sur la couche d'ancrage inférieure 630 ou en contact avec la couche d'encapsulation supérieure 120. Le cordon de colle est fermé, c'est-à-dire qu'il délimite une région centrale. Il comporte au moins une ouverture latérale traversante communiquant avec la région centrale. La région centrale peut par exemple avoir une forme sensiblement rectangulaire.

La partie supérieure de la figure 8D est reportée sur la couche d'encapsulation supérieure 120, de façon à mettre les parties saillantes de la couche structurée 250 en contact avec la couche d'ancrage inférieure 630 au niveau de la région centrale. De préférence, toutes les parties saillantes sont entièrement en regard de la région centrale. Il peut être appliqué à la partie supérieure, une pression suffisante pour enfoncer les parties saillantes dans la couche d'ancrage inférieure 630, éventuellement jusqu'à mettre en contact les parties saillantes avec la couche d'encapsulation supérieure 120. Le cordon de colle fixe la partie supérieure à la partie inférieure. La couche structurée 250 joue le rôle d'une entretoise fixant un écartement entre le substrat support 100 et le substrat d'encapsulation 200. Un cristal liquide 640 est ensuite introduit dans la région centrale par l'ouverture latérale traversante de façon à remplir tout le volume délimité par le cordon de colle et les couches d'ancrage inférieure et supérieure 630, 625. L'ouverture latérale traversante est ensuite obturée.

A l'issue de cette étape, un volume continu, délimité par la couche structurée 250, la couche d'encapsulation supérieure 120 et, éventuellement, la couche d'encapsulation 610 lorsque le moule tampon 550 n'a pas été mis en contact avec la couche d'encapsulation 610, définit un coeur d'un guide d'onde intermédiaire 130.i. Le coeur s'étend entre deux parties saillantes de la couche structurée 250. La face inclinée 251 d'une partie saillante constitue une surface réfléchissante 133.i du guide d'onde intermédiaire 130.i. La face droite 252 de la même partie saillante constitue une face de sortie 132.i du guide d'onde intermédiaire 130.i. Si la couche structurée 250 comporte au moins 3 parties saillantes, plusieurs coeurs appartenant à des guides d'onde intermédiaire 130.i respectifs sont définis de la sorte en même temps. Ils ont tous la même hauteur mesurée orthogonalement au plan principal du substrat support 100, étant donné que les arêtes de la couche structurée 250 sont coplanaires et parallèles à la face supérieure de la couche 610.

Alternativement, l'étape de lithographie par nano-impression de la figure 8C peut être réalisée sur la partie inférieure de la figure 9A. Le cordon de colle est formé sur la partie inférieure après l'étape de lithographie par nano-impression. L'étape de la figure 8C est omise, et la partie supérieure de la figure 8B est reportée sur la partie inférieure et fixée par le cordon de colle. Ce mode de réalisation est avantageux pour réaliser le troisième mode de réalisation de la figure 3, notamment pour aligner plus précisément les parties saillantes de la couche structurée 250 par rapport au guide d'onde principal 115.

Des modes de réalisation particuliers viennent d'être décrits. Différentes variantes et modifications apparaîtront à l'homme du métier. Par exemple, les résultats de simulation ont été obtenues avec une longueur d'onde dans le domaine visible, adaptée à la réalisation d'un micro-écran, mais des résultats similaires peuvent être obtenus avec une longueur d'onde utile dans le domaine des télécommunications optiques, par exemple sensiblement égale à 1 550 nm.

## Revendications

1. Structure d'extraction (10.i) d'un mode guidé de longueur d'onde $\lambda$, polarisé linéairement selon une direction de polarisation, comportant :

   o un substrat support (100) comprenant une face supérieure sensiblement plane,
   o un guide d'onde principal (115) apte à guider le mode guidé,
   o un guide d'onde intermédiaire (130.i) apte à guider un mode, dit couplé, à la longueur d'onde $\lambda$, comprenant un cœur en un cristal liquide s'étendant parallèlement à la face supérieure, et une face de sortie (132.i), le cœur s'étendant jusqu'à la face de sortie (132.i),
   o une surface plane (133.i) en regard de la face de sortie (132.i), réfléchissante à la longueur d'onde λ, faisant un angle non nul avec la face supérieure du substrat support (100),

o une première électrode (105) et une deuxième électrode (205.i), agencées par rapport au cœur du guide d'onde intermédiaire (130.i) de façon à faire basculer, dans une portion de couplage du cœur du guide d'onde intermédiaire (130.i), un indice de réfraction du cristal liquide, selon la direction de polarisation, d'un premier niveau vers un deuxième niveau, lorsqu'une variation d'une différence de potentiel électrique est appliquée entre la première et la deuxième électrodes (105, 205.i),

le premier niveau, le deuxième niveau et l'agencement de la portion de couplage par rapport au guide d'onde principal (115) étant tels que le mode guidé, lorsqu'il est présent, est couplé au moins en partie, par couplage évanescent du guide d'onde principal (115) vers la portion de couplage uniquement lorsque l'indice de réfraction de la portion de couplage est égal au deuxième niveau.

2. Structure d'extraction (10.i) selon la revendication 1, dans laquelle la première électrode (105) est dite enterrée, et dans lequel :

o l'électrode enterrée (105), le guide d'onde principal (115), le guide d'onde intermédiaire (130.i) et la deuxième électrode (205.i) s'étendent dans des plans distincts, parallèles à la face supérieure du substrat support (100),
o le guide d'onde principal (115) et le guide d'onde intermédiaire (130.i) étant intercalés entre l'électrode enterrée (105) et la deuxième électrode (205.i).

3. Structure d'extraction (10.i) selon l'une quelconque des revendications 1 ou 2, dans laquelle la surface plane réfléchissante (133.i) est une interface entre un premier milieu (260.i) et un deuxième milieu transparents à la longueur d'onde λ, le premier milieu (260.i) étant agencé entre la face de sortie (132.i) et la surface plane réfléchissante (133.i) et ayant un indice de réfraction strictement supérieur à un indice de réfraction du deuxième milieu, et telle que, lorsque le mode guidé est présent et couplé au moins en partie, une onde lumineuse transmise issue du mode guidé se propage depuis la face de sortie (132.i) vers la surface plane réfléchissante (133.i) le long d'un axe principal faisant un angle α avec une normale à la surface plane réfléchissante (133.i) supérieur ou égal à un angle d'incidence minimal sur la surface plane réfléchissante (133.i) pour lequel la lumière est totalement réfléchie.

4. Structure d'extraction (10.i) selon l'une quelconque des revendications précédentes, dans laquelle le guide d'onde intermédiaire (130.i) a une extrémité (131.i) en vis-à-vis du guide d'onde principal (115), le coeur s'étendant de l'extrémité (131.i) à la face de sortie (132.i).

5. Structure d'extraction (10.i) selon la revendication 4, dans laquelle l'extrémité (131.i) fait un angle non nul avec la face supérieure du substrat support (100) de sorte à réaliser une région de couplage adiabatique.

6. Structure d'extraction (10.i) selon l'une quelconque des revendications 1 ou 2, dans laquelle la surface plane réfléchissante (133.i) est une surface métallisée.

7. Structure d'extraction (10.i) selon l'une quelconque des revendications précédentes, dans laquelle, le mode guidé est un mode TM, le cristal liquide comporte une phase nématique et le deuxième niveau est un indice de réfraction extraordinaire du cristal liquide.

8. Structure d'extraction (10.i) selon l'une quelconque des revendications précédentes, dans laquelle la longueur d'onde λ est comprise dans le spectre visible.

9. Dispositif optique comportant un premier groupe de plusieurs structures d'extraction (10.i) selon l'une quelconque des revendications 4 à 8, partageant le substrat support (100), tel que le guide d'onde principal (115) de chaque structure d'extraction est une portion d'un premier guide d'onde principal (315).

10. Dispositif optique selon la revendication 9, comportant en outre un deuxième groupe de plusieurs structures d'extraction (10.i) selon l'une quelconque des revendications 4 à 8, partageant le substrat support (100) entre-elles et avec les structures d'extraction (10.i) du premier groupe, tel que le guide d'onde principal (115) de chaque structure d'extraction du deuxième groupe est une portion d'un deuxième guide d'onde principal (316) distinct du premier guide d'onde principal (115).

11. Dispositif optique selon la revendication 10, dans lequel, à chaque structure d'extraction (10.i) du premier groupe correspond une structure d'extraction correspondante du deuxième groupe telle que leurs guides d'onde intermédiaires (130.i) sont deux portions d'un guide d'onde intermédiaire commun.

12. Dispositif optique selon l'une quelconque des revendications 9 à 11, dans lequel la surface plane réfléchissante (133.i) de chaque structure d'extraction (10.i) du premier groupe et, le cas échéant, du deuxième groupe est l'extrémité (131.i+1) du guide d'onde intermédiaire (130.i+1) d'une autre structure d'extraction (10.i+1) du même groupe.

13. Dispositif optique selon la revendication 11, dans lequel les structures d'extraction (10.i) sont des structures d'extraction selon la revendication 5.

14. Dispositif optique selon l'une quelconque des revendications 9 à 13, dans lequel tous les guides d'onde intermédiaires (130.i) des structures d'extraction (10.i) ont des hauteurs égales, mesurées perpendiculairement à la face supérieure.

15. Procédé de fabrication d'une structure d'extraction (10.i) selon l'une quelconque des revendications 1 à 8 ou d'un dispositif optique selon l'une quelconque des revendications 9 à 14, comportant les étapes suivantes :

   o fourniture d'un substrat support (100) comprenant un guide d'onde principal (115),
   o fourniture d'un substrat d'encapsulation (200),
   o formation d'une couche structurée (250) sur le substrat support (100) ou le substrat d'encapsulation (200), par un procédé de lithographie par nano-impression, la couche structurée (250) comportant des parties saillantes de hauteurs identiques égales à une hauteur commune,
   o formation d'un cordon de colle sur le substrat support (100) ou le substrat d'encapsulation (200), tel que le cordon de colle a une épaisseur supérieure ou égale à la hauteur commune, délimite une région centrale, et comporte une ouverture latérale traversante communiquant avec la région centrale,
   o report du substrat d'encapsulation (200) sur le substrat support (100) de façon à ce que la couche structurée (250) joue le rôle d'une entretoise fixant un écartement entre le substrat d'encapsulation (200) et le substrat support (100), et délimite un volume continu dans la région centrale destiné à être le coeur du guide d'onde intermédiaire (130.i),
   o collage du substrat d'encapsulation (200) au substrat support (100) par le cordon de colle,
   o introduction d'un cristal liquide dans le volume continue par l'ouverture latérale traversante.

16. Procédé de fabrication selon la revendication 14 pour lequel le procédé de lithographie par nano-impression met en œuvre un moule de référence (540) obtenu par les étapes suivantes :

   o fourniture d'un substrat temporaire (500) comportant une face supérieure et des tranchées (520) s'étendant en profondeur dans le substrat temporaire (500) depuis la face supérieure,

   o remplissage des tranchées (520) par une résine photosensible positive (530),
   o insolation de la résine photosensible positive (530) par une lumière collimatée se propageant dans la résine photosensible positive (530) selon une direction faisant un angle $\theta_0$ compris entre 30° et 60° avec la face supérieure.

[Fig. 1A]

**Fig. 1A**

[Fig. 1B]

**Fig. 1B**

[Fig. 2]

Fig. 2

[Fig. 3]

Fig. 3

[Fig. 4A]

**Fig. 4A**

[Fig. 4B]

**Fig. 4B**

EP 4 707 906 A1

[Fig. 5A]

**Fig. 5A**

[Fig. 5B]

**Fig. 5B**

[Fig. 5C]

**Fig. 5C**

[Fig. 5D]

**Fig. 5D**

[Fig. 6]

**Fig. 6**

[Fig. 7A]

**Fig. 7A**

[Fig. 7B]

**Fig. 7B**

[Fig. 7C]

520       520       525

500

**Fig. 7C**

[Fig. 7D]

530
525

$\theta_0$

500

**Fig. 7D**

[Fig. 7E]

536       536       525

$\theta_1$

535      **Fig. 7E**      535      500

[Fig. 7F]

540       525

500

**Fig. 7F**

[Fig. 7G]

542    541

542    541

540

543

$\theta_1$

**Fig. 7G**

[Fig. 7H]

550

552    551

553

$\theta_1$

541

540

**Fig. 7H**

[Fig. 8A]

205.i-1    205.i

205.i+1

600

**Fig. 8A**

[Fig. 8B]

205.i-1    205.i

205.i+1

200 { 610
      600

**Fig. 8B**

[Fig. 8C]

$\theta_1$

250

550

200 { 610
600

**Fig. 8C**

[Fig. 8D]

252 251

250 253 $\theta_{3,i}$ 625

200 { 610
600

205.i-1 205.i 205.i+1

**Fig. 8D**

[Fig. 9A]

630

120
110

115
105
100

Z
X Y

**Fig. 9A**

[Fig. 9B]

Fig. 9B

Europäisches
Patentamt

European
Patent Office

Office européen
des brevets

**RAPPORT DE RECHERCHE EUROPEENNE**

Numéro de la demande

EP 25 20 0885

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | COLARD MATTHIAS ET AL: "Study of a liquid crystal impregnated diffraction grating for active waveguide addressing", PROCEEDINGS OF THE SPIE, SPIE, US, vol. 12023, 4 mars 2022 (2022-03-04), pages 1202302-1202302, XP060154261, ISSN: 0277-786X, DOI: 10.1117/12.2607475 ISBN: 978-1-5106-5738-0 * figures 1, 3a, 3b, 4a, 4b, 7, 11b * * le document en entier * | 1-16 | INV. G02F1/01 G02F1/035 G02F1/13 G02F1/295 G02F1/29 |
| Y | TOUBI SALAHEDDINE ET AL: "Study and validation of switchable grating using liquid crystal for active waveguide addressing", 20230314, vol. 12442, 14 mars 2023 (2023-03-14), pages 124420B-124420B, XP060175000, ISSN: 0277-786X, DOI: 10.1117/12.2649749 ISBN: 978-1-5106-5989-6 * figures 1-8 * * le document en entier * | 1-16 | |
| Y | US 2014/003766 A1 (HECK JOHN [US] ET AL) 2 janvier 2014 (2014-01-02) * figures 2A, 7 * | 1-16 | **DOMAINES TECHNIQUES RECHERCHES (IPC)** G02F G02B |
| A | US 9 366 938 B1 (ANDERSON MICHAEL H [US] ET AL) 14 juin 2016 (2016-06-14) * figure 1 * | 1-16 | |
| A | WO 2009/130637 A1 (KONINKL PHILIPS ELECTRONICS NV [NL]; STROEMER JAN F [NL] ET AL.) 29 octobre 2009 (2009-10-29) * figure 1b * | 1-16 | |
| A | FR 2 826 133 A1 (NEMOPTIC [FR]) 20 décembre 2002 (2002-12-20) * abrégé * | 1-16 | |

Le présent rapport a été établi pour toutes les revendications

| Lieu de la recherche | Date d'achèvement de la recherche | Examinateur |
|---|---|---|
| La Haye | 27 janvier 2026 | Votini, Stefano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 20 0885

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-01-2026

| Document brevet cité au rapport de recherche | Date de publication | Membre(s) de la famille de brevet(s) | | Date de publication |
|---|---|---|---|---|
| US 2014003766 A1 | 02-01-2014 | TW | 201413307 A | 01-04-2014 |
| | | US | 2014003766 A1 | 02-01-2014 |
| | | US | 2016139350 A1 | 19-05-2016 |
| | | WO | 2014004068 A2 | 03-01-2014 |
| US 9366938 B1 | 14-06-2016 | US | 9366938 B1 | 14-06-2016 |
| | | US | 2017153530 A1 | 01-06-2017 |
| | | US | 2017192264 A1 | 06-07-2017 |
| | | US | 2017212404 A1 | 27-07-2017 |
| WO 2009130637 A1 | 29-10-2009 | AUCUN | | |
| FR 2826133 A1 | 20-12-2002 | CN | 1463378 A | 24-12-2003 |
| | | FR | 2826133 A1 | 20-12-2002 |
| | | JP | 2004521390 A | 15-07-2004 |
| | | KR | 20030025291 A | 28-03-2003 |
| | | US | 2004202398 A1 | 14-10-2004 |
| | | WO | 02103443 A1 | 27-12-2002 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. MARTINEZ et al.** See-through holographic retinal projection display concept. *Optica*, October 2018, vol. 5 (10), 1200

- **MATTHIAS COLARD et al.** Study of a liquid crystal impregnated diffraction grating for active waveguide addressing. *Proc. SPIE 12023, Emerging Liquid Crystal Technologies*, 03 March 2022, vol. XVII, 1202302